# EUROPÄISCHE PATENTSCHRIFT

(11) **EP 3 006 506 B1**
(45) Veröffentlichungstag und Bekanntmachung des Hinweises auf die Patenterteilung: **07.12.2016**
(21) Anmeldenummer: 14188060.9
(22) Anmeldetag: 08.10.2014
(51) Int. Cl.: C08L 77/06, C08L 77/00, C08L 51/06, C08L 23/08, C08K 7/14

(54) **Fliessfähige Polyamide**
Flowable polyamides
Polyamide pouvant s'écouler

(43) Veröffentlichungstag der Anmeldung: 13.04.2016
(73) Patentinhaber: EMS-PATENT AG, 7013 Domat / Ems (CH)
(72) Erfinder: Lamberts, Nikolai, 7402 Bonaduz (CH); Bayer, Andreas, 7013 Domat / Ems (CH); Hoffmann, Botho, 7013 Dormat / Ems (CH)
(74) Vertreter: Bremi, Tobias Hans

(56) Entgegenhaltungen:
- EP-A1- 1 767 578
- EP-A1- 2 746 341
- WO-A1-2014/042943
- DATABASE WPI Week 197612 Thomson Scientific, London, GB; AN 1976-21740X XP002739287, -& JP S51 14952 A (NIPPON SYNTHETIC CHEM IND CO) 5. Februar 1976 (1976-02-05)

## Beschreibung

### TECHNISCHES GEBIET

Die vorliegende Erfindung betrifft hinsichtlich Fliessfähigkeit modifizierte hochschmelzende Polyamide, Verfahren zu deren Herstellung, und daraus hergestellte Formteile, sowie die Verwendung von Ethylen-Vinylacetat-Copolymeren (EVA) zur Modifikation der Fliessfähigkeit von hochschmelzenden Polyamiden.

### STAND DER TECHNIK

Bei der Herstellung von Formteilen aus thermoplastischen Werkstoffen, insbesondere Polyamid-Werkstoffen, wird das Granulat aufgeschmolzen und anschliessend in eine Form eingebracht, beispielsweise in einem Spritzguss-Verfahren. Damit die aufgeschmolzene Formmasse gut in eine solche Form eingebracht werden kann, und zwar auch bei komplexen Formen mit geringen Wandstärken, tiefen Werkzeugtemperaturen etc., ist es wichtig, dass die Formmasse bei der gewählten Verarbeitungstemperatur eine gute Fliessfähigkeit aufweist.

Die Fliessfähigkeit von Polymerschmelzen (Schmelzviskosität) wird u.a. mit dem Schmelzflussindex (Melt Volume Rate, MVR) charakterisiert, der das Fliessverhalten eines Thermoplasten bei bestimmten Druck- und Temperaturbedingungen angibt. Nach ISO 1133 wird der MVR mit einem Kapillarrheometer bestimmt: In einem beheizbaren Zylinder wird das Material als Granulat oder Pulver aufgeschmolzen und unter einem Druck, der durch eine Auflagelast erzeugt wird, durch eine definierte Düse (Kapillare) gedrückt. Ermittelt als MVR-Wert wird das austretende Volumen der Polymerschmelze (Extrudat) als Funktion der Zeit, mit der Einheit cm³/10min.

Im Stand der Technik wird eine Vielzahl von Möglichkeiten beschrieben, die Fliessfähigkeit von Polymerschmelzen zu verbessern, sprich die Schmelzviskosität zu reduzieren und damit die Fliesslänge bei der Spritzgussverarbeitung zu erhöhen.

In der EP-A-0 334 170 werden Umsetzungsprodukte aus einem basischen Carbonsäureamid und einem phosphorenthaltenden Ester als Hilfsmittel für die Fliessverbesserung von feststoffhaltigen Polymeren vorgeschlagen. Gearbeitet wird als Matrix ein Epoxidharz.

In der EP-A-0 359 037 werden niedermolekulare, flüssigkristalline Ester und Esteramide, jeweils mit aromatischen Kernen, als Hilfsmittel zur Herstellung von leichtfliessenden Polyamidformmassen vorgeschlagen. Gearbeitet wird Polyamid 6 als Matrix.

In der DE-A-10 2008 032 205 werden Polyalkylenglykolester (PAGE) mit niedrigem Molekulargewicht als Fliessverbesserer in Polyamiden beschrieben. Gearbeitet wird Polyamid 6 als Matrix.

Dagegen wird in DE-A-10 2005 023 420 ein speziell geregeltes Polyamid-Oligomer als Fliessverbesserer für hochgefüllte Polyamidformmassen vorgestellt. Gearbeitet wird in einer Matrix von Polyamid 12 ein Polyamid 12 Oligomer.

### DARSTELLUNG DER ERFINDUNG

Es ist entsprechend unter anderem Aufgabe der vorliegenden Erfindung, hinsichtlich Verarbeitbarkeit und insbesondere hinsichtlich Fliessfähigkeit verbesserte PolyamidFormmassen zur Verfügung zu stellen. Diese Aufgabe wird durch eine PolyamidFormmasse nach Anspruch 1 gelöst.

Konkret betrifft die vorliegende Erfindung eine Polyamidformmasse aus den folgenden Komponenten:
(A) 29 - 89 Gew.-% wenigstens eines teilkristallinen thermoplastischen Homo- oder Co-Polyamids ausgewählt aus der folgenden Gruppe: aliphatisches Polyamid, cycloaliphatisches Polyamid, teilaromatisches Polyamid, oder eine Mischung davon, mit einer Schmelztemperatur (Tₘ) von wenigstens 270°C und einer Schmelzenthalpie (ΔHm) im Bereich von 30-70 J/g, insbesondere im Bereich von 40-65 J/g, jeweils gemessen nach ISO-Norm 11357-1 am Granulat mit einer Aufheizrate von 20°C/min;
(B) 1 - 15 Gew.-% Ethylen-Vinylacetat-Copolymer;
(C) 10 - 70 Gew.-% Füll- und Verstärkungsstoffe ausgewählt aus der folgenden Gruppe: faserförmige Verstärkungsstoffe, teilchenförmige Füllstoffe sowie Mischungen davon;
(D) 0 - 20 Gew.-% Schlagzähmodifikator verschieden von (B) und/oder Polymere verschieden von (A);
(E) 0 - 20 Gew.-% Flammschutzmittel
(F) 0 - 5 Gew.-% Additive
wobei die Summe der Komponenten (A)-(F) 100 Gewichtsprozent ausmacht.

Vorzugsweise verfügt nicht nur die Komponente (A) allein betrachtet über eine Schmelztemperatur (Tₘ), gemessen nach ISO-Norm 11357-1 am Granulat mit einer Aufheizrate von 20 °C/min, von wenigstens 270°C, sondern auch die gesamte Polyamidformmasse aus den Komponenten (A)-(F).

Wenn im Zusammenhang mit den Komponenten (B)-(F) in der Folge bevorzugte Bereiche angegeben werden, so bleibt die Summe der Komponenten (A)-(F) stets 100 Gewichtsprozent, und bevorzugter Weise passt sich der Anteil der Komponente (A) entsprechend an, wobei die Konzentration von (A) einen Wert von 29 Gew.-% nicht unterschreitet und einen Wert von 89 Gew.-% nicht überschreitet.

Unerwarteter Weise wurde festgestellt, dass Ethylen-Vinylacetat-Copolymer (EVA), als Bestandteil obiger Formmasse, zu einer Verbesserung der Fliesseigenschaften führt, das heisst zu einer kontrollierten Erhöhung der MVR-Werte und/oder der Fliesslängen. Dies erstaunlicherweise ohne dabei gleichzeitig die mechanischen Eigenschaften von fertigen Bauteilen negativ zu beeinflussen. Üblicherweise ist es nämlich so, dass die Verbesserung von Fliesseigenschaften durch entsprechende Additive mit dem Nachteil verbunden ist, dass beim fertigen Bauteil schlechtere mechanische Eigenschaften, insbesondere eine Versprödung, resultieren, so insbesondere der Fall wenn beispielsweise, wie oben im Stand der Technik vorgeschlagen, Oligomere beigefügt werden. Die Zugabe von EVA verändert also offenbar die innere Struktur, insbesondere und vorzugsweise dann, wenn die Bearbeitung im Mischer bei der Herstellung der Polyamidformmasse, wenigstens bei der Vermischung der Komponenten (A) und (B), oder bei der Verarbeitung der Polyamidformmasse oder bei der Verarbeitung einer Mischung der Komponenten (A) - (F) z.B. in einer Spritzgussmaschine in einem Temperaturfenster von T_{M} von wenigstens 290 °C, während einer Zeitdauer (Verweilzeit, t_{R}), wie sie bei üblichen Extrusions- oder Spritzgussverfahren auftreten, von vorzugsweise einigen Sekunden bis wenigen Minuten, erfolgt. Die Verweilzeit t_{R} liegt besonders bevorzugt im Bereich von 10 bis 200 Sekunden. Unter der Temperatur T_{M} ist dabei die Massetemperatur der Mischung im Mischer zu verstehen. Unter der Zeit t_{R} ist die mittlere Verweilzeit der Mischung im Mischer, insbesondere die Verweilzeit der Mischung im Mischer bei einer Temperatur von T_{M}, zu verstehen. Die Massetemperatur und die Verweilzeit sollten in wenigstens einem Bereich (Zone) des Mischers diese Bedingungen erfüllen.

So wird es möglich, durch die kontrollierte Zugabe von EVA im beanspruchten Mengenbereich die Fliesseigenschaften des Polyamids auf gewünschte Werte einzustellen ohne nachteilige mechanische Eigenschaften in Kauf nehmen zu müssen.

Ohne an eine theoretische Erklärung gebunden zu sein so wird vermutet, dass bei der Herstellung und/oder Verarbeitung oben angegebener Formmasse oder der Mischungsvorbereitung, vorzugsweise unter den spezifischen oben angegebenen Bedingungen, eine teilweise Zersetzung des EVA unter Freisetzung von Essigsäure in ausreichendem Masse abläuft und die freigesetzte Essigsäure dann in ausreichendem Masse mit der Polyamidmatrix reagieren kann. Die Essigsäure scheint die PolyamidMatrix gewissermassen anzugreifen und zu einem teilweisen Abbau und damit zu einer Verbesserung der Fliesseigenschaften respektive zu einer Erhöhung der MVR-Werte ohne gleichzeitige Reduktion der mechanischen Eigenschaften führen.

Es gibt bereits Offenbarungen, die niedrig-schmelzende Polyamid-EVA Mischungen beschreiben, die hauptsächlich im Bereich der Schmelzklebstoffe oder Folien anzusiedeln sind. Bei der Herstellung und Verarbeitung dieser Mischungen werden niedrige Temperaturen gewählt und damit tritt keine Zersetzung und damit auch keine Reaktion etwaiger Zersetzungsprodukte mit dem Polyamid ein, d.h. es resultiert keine Änderung der Schmelzviskosität. Zudem sind die Formmassen meistens unverstärkt.

Beispielhaft für solche Schmelzklebstoffe sei die US 3,997,625 genannt, welche Schmelzklebstoffe bestehend aus einer Mischung aus tiefschmelzendem Copolyamid 12/6/66 und mindestens 20% Ethylen-Vinylacetat-Copolymer, welches 5-20% Vinylacetat enthält, beschreibt. Die Verarbeitung erfolgt bei 180°C.

Die EP-A-0 771 853 beschreibt eine Polyamidformmasse für die Herstellung von Filmen mit guten optischen Eigenschaften und gutem Widerstand gegen Loch-Bildung bei wiederholter mechanischer Beanspruchung, enthaltend 93-99.5% Polyamid und 0.5-7% eines säuremodifizierten, teilverseiften Polyethylenvinylacetats. Der Vinylacetatgehalt liegt bei 20-50%, der Verseifungsgrad beträgt 50-95%. Genannt wird in einer Aufzählung von Polyamiden 6/6T als einziges teilaromatisches System. Zu 6/6T wird kein Schmelzpunkt angegeben, dieser kann in einem weiten Bereich und unterhalb von 250°C liegen. Gearbeitet wird PA6 unverstärkt, und die Verarbeitung erfolgt bei einer Temperatur von maximal 250°C.

Die EP-A-1 767 578 beschreibt Formmassen aus Polyamid, Schlägzähmodifikator, Verträglichkeitsvermittler, Füllstoffen, Leitfähigkeitsadditiven und EVA, das teilverseift vorliegen kann. Gearbeitet wird lediglich Polyamid 6 als Hauptkomponente der Polyamidmatrix, dessen Schmelzpunkt bekanntlich 220°C beträgt. Teilaromatische Polyamide werden nicht genannt als Hauptkomponenten des Polyamids. Die Verarbeitung des Materials erfolgt bei einer Temperatur von 230°C. Aus dem Vergleich von Beispiel 1 (Tab.1) und Vergleichsbeispiel 1 (Tab.3) wird ersichtlich, dass die Schmelzviskosität durch den Zusatz von 2.5% EVA unverändert bei 50 g/10min (MVR) bleibt, also keine Reduktion der Schmelzviskosität bewirkt wurde.

Addonizio et al. in Journal of Materials Science 24 (1989) 2939-2950 beschäftigen sich mit der Rheologie von Blends aus PA6 und EVA, die bei einer Temperatur von 240°C hergestellt wurden. Mit normal viskosem EVA ergeben sich in den Blends durchweg höhere Scherviskositäten im Vergleich zum reinen PA6.

Einige Dokumente des Standes der Technik erwähnen als Matrix verschiedenste Polyamide. Die EP-A-1 801 162 zum Beispiel betrifft Polyamid EVA Blends, enthaltend 30-80% Polyamid, 10-69% vernetztes EVA und 1-10% eines säuremodifizierten EVA als Verträglichkeitsvermittler. Gearbeitet wird ausschliesslich PA12, bekanntlich mit einem Schmelzpunkt von etwas unter 180 °C, damit erfolgt die Verarbeitung im Bereich von dessen Schmelzpunkt, das heisst etwas oberhalb von ca. 180 °C, eine Faserverstärkung liegt nicht vor und wird auch nicht beansprucht. Die Formmassen sollen eine geringe Ölquellung aufweisen. Es gibt keinen Hinweis auf eine Fliessverbesserung der Formmasse, was auch nicht verwundert, da bei diesen Verarbeitungstemperaturen keine Zersetzung stattfinden kann.

Die US-A-2013/0253115 betrifft hitzestabilisierte Polyamidformmassen, die neben Polyamid 3-10% eines Schlagzähigkeitsverbesserers und Polyhydroxyverbindungen enthalten. Gearbeitet wird eine Formmasse aus Polyamid 66/6T, die Verarbeitung erfolgt bei 280 °C mit Glasfasern, einem MAH-gepfropften Ethylen-Propylen-Copolymer und einer Hitzestabilisierung aus Dipentaerythrit und CuI/KI.

### Komponente (A):

Als Komponente (A) liegen in der Polyamidformmasse 29 - 89 Gew.-% wenigstens eines thermoplastischen Homo- oder Co-Polyamids vor ausgewählt aus der folgenden Gruppe: aliphatisches Polyamid, cycloaliphatisches Polyamid, teilaromatisches Polyamid, oder eine Mischung davon.

Gemäss einer bevorzugten Ausführungsform basiert die eingesetzte Matrix (A) der Polyamidformmassen auf mindestens einem hochschmelzenden Polyamid, welches einen eine Schmelztemperatur (Tₘ) gemessen nach ISO-Norm 11357-1 am Granulat mit einer Aufheizrate von 20 °C/min, im Bereich von 280°C - 340°C, vorzugsweise im Bereich von 290 °C-330°C aufweist oder eine Mischung solcher Polyamide. Vorzugsweise verfügt bei Vorliegen einer Mischung als Komponente (A) nicht nur die Mischung über den beanspruchten minimalen Schmelzpunkt, sondern auch jede der individuellen Komponenten innerhalb von (A).

Wie bereits oben erwähnt kann die Komponente A sowohl auf wenigstens einem aliphatischen, cycloaliphatischen als auch wenigstens einem teilaromatischen teilkristallinen Polyamid mit dem angegebenen Schmelzpunktbereich beruhen. Ebenfalls möglich sind Mischungen aus derartigen Systemen, wobei bevorzugtermassen diese Mischungen in der Hauptsache auf wenigstens einem teilaromatischen teilkristallinen Polyamid beruhen.

Die aliphatischen Polyamide für die Komponente (A) mit dem angegebenen Schmelzpunktbereich sind ausgewählt aus der Gruppe: PA 46, PA 46/66, PA 46/56. Darunter ist PA 46 bevorzugt, gegebenenfalls in Mischung mit einem teilkristallinen teilaromatischen Polyamid.

Gemäss einer weiteren bevorzugten Ausführungsform ist dabei das teilaromatische, teilkristalline Polyamid der Komponente (A), bevorzugtermassen dann, wenn die Komponente A im Wesentlichen nur durch wenigstens ein teilkristallines teilaromatisches Polyamid gebildet wird, aufgebaut aus:
(A1) 25 - 100 Mol-% Terephthalsäure, bezogen auf den Gesamtgehalt an anwesenden Säuren,
   0 - 75 Mol-%, bezogen auf den Gesamtgehalt an anwesenden Säuren, wenigstens einer Dicarbonsäure ausgewählt aus der Gruppe: von Terephthalsäure verschiedene aromatische Dicarbonsäure mit 8 bis 20 Kohlenstoffatomen, aliphatische Dicarbonsäure mit 6 bis 36 Kohlenstoffatomen, cycloaliphatische Dicarbonsäure mit 8 bis 20 Kohlenstoffatomen oder eine Mischung davon,
(A2) 25 - 100 Mol%, bezogen auf den Gesamtgehalt an anwesenden Diaminen, wenigstens eines aliphatischen Diamins mit 4 bis 36 Kohlenstoffatomen, 0- 75 Mol-%, bezogen auf den Gesamtgehalt an anwesenden Diaminen, wenigstens eines Diamins ausgewählt aus der Gruppe: cycloaliphatisches Diamin mit 6 bis 20 Kohlenstoffatomen, araliphatisches Diamin mit 8 bis 20 C-Atomen,
   wobei der prozentuale Molgehalt an Dicarbonsäuren 100% und der prozentuale Molgehalt an Diaminen 100% ausmacht,
   sowie aus:
(A3) 0 - 100 Mol-% Aminocarbonsäuren und/oder Lactame mit 6 bis 12 Kohlenstoffatomen.

Dies mit der Massgabe, dass die Konzentration von (A3) höchstens 40 Gew.-%, bevorzugt höchstens 30 Gew.-%, insbesondere höchstens 20 Gew.-% bezogen auf die Summe von (A1) bis (A3) ausmacht.

Das hochschmelzende Polyamid (Komponente A) hat gemäss einer bevorzugten Ausführungsform eine Lösungsviskosität, gemessen nach ISO 307 in m-Kresol (0,5 Gew.-%, 20°C) von ηᵣₑₗ kleiner 2,6, bevorzugt von ηᵣₑₗ kleiner 2,3, insbesondere von ηᵣₑₗ kleiner 2,0 und von ηᵣₑₗ wenigstens 1,4, bevorzugt von ηᵣₑₗ wenigstens 1,5, insbesondere von ηᵣₑₗ wenigstens 1,55.

Bevorzugtermassen beruht also die Komponente (A) auf einem Polyphthalamid. Polyphthalamide sind Polyamide auf Basis von Terephthalsäure und aliphatischen oder cycloaliphatischen Diaminen und gegebenenfalls weiteren aliphatischen, cycloaliphatischen oder aromatischen Dicarbonsäuren sowie Lactamen und/oder Aminocarbonsäuren.

In Frage kommt als hochschmelzendes Polyamid generell ein Polyamid auf Basis von aromatischen Dicarbonsäuren und aliphatischen Diaminen. Ein Teil der aromatischen Dicarbonsäuren kann durch aliphatische und/oder cycloaliphatische Dicarbonsäuren, ein Teil der aliphatischen Diamine kann durch cycloaliphatische und/oder araliphatische Diamine ersetzt werden. Ein teilweiser Ersatz der Dicarbonsäuren und der Diamine kann auch durch Lactame und/oder Aminocarbonsäuren erfolgen.

Somit werden die hochschmelzenden Polyamide der Komponente (A) bevorzugtermassen aus folgenden Komponenten gebildet:
(A1) Dicarbonsäuren:
   50 - 100 Mol-% Terephthalsäure, bezogen auf den Gesamtgehalt an anwesenden Säuren,
   0 - 50 Mol-%, bezogen auf den Gesamtgehalt an anwesenden Säuren, einer anderen aromatischen Dicarbonsäure mit 8 bis 20 Kohlenstoffatomen, und/oder einer aliphatischen Dicarbonsäure mit 6 bis 36 Kohlenstoffatomen, und/oder einer cycloaliphatischen Dicarbonsäure mit 8 bis 20 Kohlenstoffatomen, oder einer Mischung solcher Systeme
(A2) Diamine:
   50 - 100 Mol-% mindestens eines aliphatischen Diamins mit 4 bis 36 Kohlenstoffatomen, bezogen auf den Gesamtgehalt an anwesenden Diaminen,
   0- 50 Mol-% cycloaliphatische Diamine mit 6 bis 20 Kohlenstoffatomen, und/oder araliphatische Diamine mit 8 bis 20 C-Atomen, wie z.B. MXDA und PXDA, oder einer Mischung solcher cycloaliphatischer oder araliphatischer Systeme,
wobei in den hochschmelzenden Polyamiden der prozentuale Molgehalt an Dicarbonsäuren 100% und der prozentuale Molgehalt an Diaminen 100% ausmacht, und, gegebenenfalls, aus:
(A3) Aminocarbonsäuren und/oder Lactamen, enthaltend 0 - 100 Mol-% Lactame mit 6 bis 12 Kohlenstoffatomen, und/oder Aminocarbonsäuren mit 6 bis 12 Kohlenstoffatomen.

Während die Komponenten (A1) und (A2) weitgehend äquimolar eingesetzt werden, beträgt die Konzentration von (A3) auf jeden Fall höchstens 40 Gew.-%, bevorzugt höchstens 30 Gew.-%, insbesondere höchstens 20 Gew.-% bezogen auf die Summe von (A1) bis (A3).

Zusätzlich zu den weitgehend äquimolar eingesetzten Komponenten (A1) und (A2) können Dicarbonsäuren (A1) oder Diamine (A2) zur Regelung der Molmasse oder zum Ausgleich von Monomerverlusten bei der Polyamidherstellung eingesetzt werden, sodass in ihrer Gesamtheit die Konzentration einer Komponente A1 oder A2 überwiegen kann.

Ein Teil der Terephthalsäure (TPS), konkret bis zu 50 Mol-%, bevorzugt bis zu 48 Mol-% und insbesondere bis zu 46 Mol-%, kann durch andere aromatische, aliphatische oder cycloaliphatische Dicarbonsäuren mit 6 bis 36 Kohlenstoffatomen (bezogen auf die Gesamtmenge der Dicarbonsäuren) ersetzt sein.

Zu den geeigneten aromatischen Dicarbonsäuren zählen die Naphthalindicarbonsäure (NDA) und die Isophthalsäure (IPS).

Geeignete aliphatische Dicarbonsäuren sind Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure und Dimerfettsäure (C36). Geeignete cycloaliphatische Dicarbonsäuren sind die cis- und/oder trans-Cyclohexan-1,4-dicarbonsäure und/oder cis-und/oder trans-Cyclohexan 1,3-dicarbonsäure (CHDA).

Die als Komponente A2 zu 50 - 100 Mol-% eingesetzten Diamine sind bevorzugtermassen ausgewählt aus der Gruppe 1,4-Butandiamin, 1,5-Pentandiamin, 1,6-Hexandiamin, 2-Methyl-1,5-pentandiamin (MPD), 1,7-Heptandiamin, 1.8-Octandiamin, 1,9-Nonandiamin, 2-Methyl-1,8-octandiamin, 2,2,4-Trimethylhexamethylendiamin, 2,4,4-Trimethylhexamethylendiamin, 5-Methyl-1,9-nonandiamin, 1,10-Decandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, 1,18-Octadecandiamin. Hiervon bevorzugt sind die Diamine 1,6-Hexandiamin, 2-Methyl-1,5-pentandiamin, 1,9-Nonandiamin, 2-Methyl-1,8-octandiamin, 1,10-Decandiamin und 1,12-Dodecandiamin, insbesondere 1,6-Hexandiamin und 1,10-Decandiamin.

Die oben genannten aliphatischen Diamine können in untergeordneter Menge, das heisst konkret von nicht mehr als 50 Mol-%, von vorzugsweise nicht mehr als 40 Mol-% und insbesondere nicht mehr als 30 Mol-%, jeweils bezogen auf die Gesamtmenge der Diamine) durch andere Diamine ersetzt werden.

Als cycloaliphatische Diamine können vorzugsweise Cyclohexandiamin, 1,3-Bis-(Aminomethyl)-cyclohexan (BAC), Isophorondiamin, Norbornandimethylamin, 4,4'-Diaminodicyclohexylmethan (PACM), 2,2-(4,4'-Diaminodicyclohexyl)propan (PACP), Bis-(4-Amino-3-ethyl-cyclohexyl)-methan (EACM), Bis-(4-Amino-3,5-dimethy-cyclohexyl)-methan (TMDC) und 3,3'-Dimethyl-4,4'-diaminodicyclohexylmethan (MACM) verwendet werden.

Als araliphatisches Diamine können vorzugsweise m-Xylylendiamin (MXDA) und p-Xylylendiamin (PXDA) eingesetzt werden.

Zusätzlich zu den beschriebenen Dicarbonsäuren und Diaminen können noch Lactame und/oder Aminocarbonsäuren als polyamidbildende Komponenten (Komponente A3) in einem gewissen beschränkten Umfang eingesetzt werden. Geeignete Verbindungen sind vorzugsweise Caprolactam (CL), α,ω-Aminocapronsäure, α,ω-Aminononansäure, α,ω-Aminoundecansäure (AUA), Laurinlactam (LL) und α,ω-Aminododecansäure (ADA). Die Konzentration der zusammen mit den Komponenten (A1) und (A2) eingesetzten Aminocarbonsäuren und/oder Lactame beträgt dabei aber höchstens 40 Gew.%, bevorzugt höchstens 30 Gew.-% und besonders bevorzugt höchstens 20 Gew.-% bezogen auf die Summe der Komponenten (A1) und (A2).

Speziell bevorzugte Lactame sind Lactame bzw. α,ω-Aminosäuren mit 4, 6, 7, 8, 11 oder 12 C-Atomen. Dies sind beispielsweise die Lactame Pyrrolidin-2-on (4 C-Atome), ε-Caprolactam (6 C-Atome), Önanthlactam (7 C-Atome), Capryllactam (8 C-Atome), Laurinlactam (12 C-Atome) bzw. die α,ω-Aminosäuren 1,4-Aminobutansäure, 1,6-Aminohexansäure, 1,7-Aminoheptansäure, 1,8-Aminooctansäure, 1,11-Aminoundecansäure und 1,12-Aminododecansäure.

Weil Diamine flüchtigere Verbindungen als Dicarbonsäuren sind, entsteht beim Herstellprozess typischerweise ein Diaminverlust. Zum Ausgleich des Diaminverlustes wird deshalb bevorzugt dem Monomeransatz ein Diaminüberschuss von 1 bis 8 Gew.-% bezogen auf die Gesamtmenge der Diamine zugesetzt. Mit dem Diaminüberschuss wird auch das Molekulargewicht und die Verteilung der Endgruppen geregelt.

Zur Reglung der Molmasse, der relativen Viskosität bzw. der Fliessfähigkeit oder des MVR können dem Ansatz und/oder dem Vorkondensat (vor der Nachkondensation) Regler in Form von Monocarbonsäuren oder Monoaminen zugesetzt werden. Als Regler geeignete, aliphatische, cycloaliphatische oder aromatische Monocarbonsäuren oder Monoamine sind Essigsäure, Propionsäure, Buttersäure, Valeriansäure, Capronsäure, Laurinsäure, Stearinsäure, 2-Ethylhexansäure, Cyclohexansäure, Benzoesäure, Butylamin, Pentylamin, Hexylamin, 2-Ethylhexylamin, n-Octylamin, n-Dodecylamin, n-Tetradecylamin, n-Hexadecylamin, Stearylamin, Cyclohexylamin, 3-(Cyclohexylamino)-propylamin, Methylcyclohexylamin, Dimethylcyclohexylamin, Benzylamin, 2-Phenylethylamin, u.a. Die Regler können einzeln oder in Kombination benutzt werden. Es können auch andere monofunktionelle Verbindungen als Regler eingesetzt werden, die mit einer Amino- oder Säuregruppe reagieren können wie Anhydride, Isocyanate, Säurehalogenide oder Ester. Die bevorzugte Einsatzmenge der Regler liegt zwischen 10 und 200 mmol pro kg Polymer.

Die teilaromatischen Copolyamide (A) können mit an sich bekannten Verfahren hergestellt werden. Geeignete Verfahren sind an verschiedener Stelle beschrieben worden, und in der Folge sollen einige der möglichen Verfahren angegeben werden, auf den Offenbarungsgehalt der nachfolgend genannten Patent-Dokumente wird hinsichtlich des Verfahrens zur Herstellung des Copolyamids der Komponente A der vorliegenden Erfindung ausdrücklich verwiesen DE 195 13 940, EP 0 976 774, EP 0 129 195, EP 0 129 196, EP 0 299 444, US 4,831,106, US 4,607,073, DE 14 95 393 und US 3,454,536.

Zur Herstellung der Komponente (A) geeignet ist vorzugsweise die zweistufige Herstellung zuerst eines tiefviskosen, niedermolekularen Vorkondensats und mit anschliessender Nachkondensation in der Festphase oder der Schmelze (z.B. im Extruder). Es ist auch ein dreistufiges Verfahren aus 1. Vorkondensation, 2. Festphasenpolymerisation und 3. Schmelzepolymerisation möglich, wie es zum Beispiel in DE 696 30 260 angegeben ist, auf deren Offenbarungsgehalt diesbezüglich verwiesen wird.

Für Produkte mit Schmelzpunkten unter 300°C eignet sich auch das in der US 3,843,611 und US 3,839,296 beschriebene einstufige Batchverfahren, bei dem die Mischung der Monomeren oder deren Salze für 1 bis 16 Stunden auf Temperaturen von 250 bis 320°C aufgeheizt werden und der Druck von einem Maximum unter Abdampfen von gasförmigen Material gegebenenfalls mit Hilfe eines Inertgases auf den niedrigsten Druck von bis zu 1 mm Hg reduziert wird.

Allgemein formuliert ist also eine bevorzugte Ausführungsform der Polyamidformmasse hinsichtlich der Komponente (A1) dadurch gekennzeichnet, dass die von Terephthalsäure verschiedene Dicarbonsäure der Komponente (A1) ausgewählt ist aus der Gruppe: Naphthalindicarbonsäure, Isophthalsäure, Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure, Dimerfettsäure (C36), cis- und/oder trans-Cyclohexan-1,4-dicarbonsäure, cis- und/oder trans-Cyclohexan 1,3-dicarbonsäure respektive Mischungen davon.

Eine bevorzugte Ausführungsform der Polyamidformmasse hinsichtlich der Komponente (A2) ist dadurch gekennzeichnet, dass das aliphatische Diamin der Komponente (A2) ausgewählt ist aus der Gruppe: 1,4-Butandiamin, 1,5-Pentandiamin, 1,6-Hexandiamin, 2-Methyl-1,5-pentandiamin, 1,7-Heptandiamin, 1,8-Octandiamin, 1,9-Nonandiamin, 2-Methyl-1,8-octandiamin, 2,2,4-Trimethylhexamethylendiamin, 2,4,4-Trimethylhexamethylendiamin, 5-Methyl-1,9-nonandiamin, 1,10-Decandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, 1,18-Octadecandiamin oder eine Mischung davon, wobei folgende Gruppe bevorzugt ist: 1,6-Hexandiamin, 2-Methyl-1,5-pentandiamin, 1,9-Nonandiamin, 2-Methyl-1,8-octandiamin, 1,10-Decandiamin und 1,12-Dodecandiamin, insbesondere 1,6-Hexandiamin und 1,10-Decandiamin, oder eine Mischung davon.

Eine weitere bevorzugte Ausführungsform der Polyamidformmasse hinsichtlich der Komponente (A2) ist dadurch gekennzeichnet, dass das cycloaliphatische respektive araliphatische Diamin der Komponente (A2) ausgewählt ist aus der Gruppe: Cyclohexandiamin, 1,3-Bis-(Aminomethyl)-cyclohexan, Isophorondiamin, Norbornandimethylamin, 4,4'-Diaminodicyclohexylmethan, 2,2-(4,4'-Diaminodicyclohexyl)propan und 3,3'-Dimethyl-4,4'-diaminodicyclohexylmethan, m-Xylylendiamin und p-Xylylendiamin, oder eine Mischung davon.

Eine weitere bevorzugte Ausführungsform der Polyamidformmasse hinsichtlich der Komponente (A3) ist dadurch gekennzeichnet, dass die Komponente (A3) ausgewählt ist aus der Gruppe: Caprolactam, α,ω-Aminocapronsäure, α,ω-Aminononansäure, α,ω-Aminoundecansäure, Laurinlactam α,ω-Aminododecansäure, α,ω-Aminosäuren mit 4, 6, 7, 8, 11 oder 12 C-Atomen, insbesondere Pyrrolidin-2-on, ε-Caprolactam, Önanthlactam, Capryllactam, Laurinlactam, 1,4-Aminobutansäure, 1,6-Aminohexansäure, 1,7-Aminoheptansäure, 1,8-Aminooctansäure, 1,11-Aminoundecansäure und 1,12-Aminododecansäure oder eine Mischung davon.

Konkrete Vertreter für die erfindungsgemässen teilaromatischen Polyamide sind beispielsweise folgende Systeme oder Mischungen (Blends) davon: PA 4T/46, PA 4T/66, PA 4T/4I, PA 4T/4I/46, PA 4T/46/66, PA 4T/4I/66, PA 4T/56, PA 5T/56, PA 5T/5I, PA 5T/66, PA 6T/6I, PA 6T/66, PA 6T/610, PA 6T/612, PA 6T/12, PA 6T/11, PA 6T/6, PA 6T/10T, PA 6T/10I, PA 6T/106, PA 6T/1010, PA 6T/66/106, PA 10T/66, PA 10T/612, PA 10T/1010, PA 10T/1012, PA 10T/10I, PA10T/12, PA10T/11, PA 6T/MACM10, PA 6T/MACM12, PA 6T/MACM18, PA 6T/MACMI, PA MACMT/6I, PA 6T/PACM6, PA 6T/PACM10, PA 6T/PACM12, PA 6T/PACM18, PA 6T/PACMI, PACMT/6I, PA MPDT/MPDI, PA MPDT/MPD6, PA 6T/MPDI, PA 6T/MPDT (MPD=2-Methylpentandiamin), PA 6T/9T, PA 6T/12T, PA 6T/6I/66, PA 6T/6I/6, PA 6T/6I/12, PA 6T/66/6, PA 6T/66/12, PA 6T/6I/MACMI, PA 6T/66/PACM6. Gemäss einer bevorzugten Ausführungsform macht der Anteil an Terephthalsäure in der Komponente (A1) wenigstens 50 Mol-% aus, vorzugsweise wenigstens 52 Mol-%, insbesondere vorzugsweise wenigstens 54 Mol-%, und ganz besonders bevorzugt wenigstens 62 Mol-%, wobei bevorzugtermassen die Komponente (A2) ausschliesslich aus Hexamethylendiamin besteht oder ausschliesslich aus 2-Methyl-1,5-Pentandiamin oder ausschliesslich aus einer Mischung aus Hexamethylendiamin und 2-Methyl-1,5-Pentandiamin.

Erfindungsgemäss sind also als hochschmelzende Polyamide (A), insbesondere folgende teilaromatische Copolyamide bevorzugt:
- teilkristallines Polyamid, hergestellt aus mindestens 50 Mol-% Terephthalsäure und Hexamethylendiamin, als einzige Diaminkomponente; - teilkristallines Polyamid, hergestellt aus mindestens 52 Mol-% Terephthalsäure und Hexamethylendiamin;
- teilkristallines Polyamid, hergestellt aus mindestens 54 Mol-% Terephthalsäure und Hexamethylendiamin;
- teilkristallines Polyamid, hergestellt aus mindestens 62 Mol-% Terephthalsäure und Hexamethylendiamin;
- teilkristallines Polyamid, hergestellt aus mindestens 60-70 Mol-% Terephthalsäure, 20-30 Mol-% Isophthalsäure, 5-15 Mol-% Adipinsäure und Hexamethylendiamin;
- teilkristallines Polyamid, hergestellt aus mindestens 50 Mol-% Terephthalsäure und 2-Methyl-1,5-pentandiamin;
- teilkristallines Polyamid, hergestellt aus mindestens 50 Mol-% Terephthalsäure und einer Mischung aus Hexamethylendiamin und 2-Methyl-1,5-pentandiamin.

Gemäss einer weiteren bevorzugten Ausführungsform macht der Anteil an Terephthalsäure in der Komponente (A1) wenigstens 50 Mol-% aus, wobei innerhalb der Komponente (A2) das aliphatische Diamin Hexamethylendiamin in einem Anteil von wenigstens 10 Mol-%, bevorzugt wenigstens 15 Mol-% und besonders bevorzugt wenigstens 50 Mol-%, umfasst, und dass der verbleibende Anteil an Diamin ausgewählt ist aus der Gruppe: Nonandiamin, Methyloctandiamin, Decandiamin, Dodecandiamin, Trimethyl-hexamethylendiamin, m-Xylylendiamin, Bis-(4-aminocyclohexyl)-methan, Bis-(4-amino-3-methyl-cyclohexyl)-methan, oder eine Mischung davon, wobei vorzugsweise aus dieser Gruppe nur ein System in einer Mischung mit Hexamethylendiamin eingesetzt wird.

Erfindungsgemäss sind also als hochschmelzende Polyamide (A), weiter insbesondere folgende teilaromatische Copolyamide bevorzugt:
- teilkristallines Polyamid, hergestellt aus 50-100 Mol-% Terephthalsäure und einer Mischung aus mindestens zwei Diaminen, ausgewählt aus der Gruppe Hexamethylendiamin, Nonandiamin, Methyloctandiamin, Decandiamin und Dodecandiamin, wobei bevorzugt jeweils die Diamine Nonandiamin und Methyloctandiamin bzw. Decandiamin und Hexandiamin kombiniert werden;
- teilkristallines Polyamid, hergestellt aus mindestens 50 Mol-% Terephthalsäure und einer Mischung aus Hexamethylendiamin und Decandiamin, wobei mindestens 10 Mol-%, bevorzugt mindestens 15 Mol-%, insbesondere bevorzugt wenigstens 50 Mol-%, Hexamethylendiamin, bezogen auf den Gesamtdiamingehalt, eingesetzt wird;
- teilkristallines Polyamid, hergestellt aus mindestens 80 Mol-%, bevorzugt 100 Mol-% Terephthalsäure und aus 10 - 60 Mol-% Hexamethylendiamin und 40 - 90 Mol-% Decandiamin,
- teilkristallines Polyamid, hergestellt aus mindestens 50 Mol-% Terephthalsäure und einer Mischung aus Hexamethylendiamin und Trimethylhexamethylendiamin, wobei mindestens 10 Mol-%, bevorzugt wenigstens 15 Mol-% und besonders bevorzugt wenigstens 50 Mol-%, Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und m-Xylylendiamin, wobei mindestens 10 Mol-%, bevorzugt wenigstens 15 Mol-% und besonders bevorzugt wenigstens 50 Mol-%, Hexamethylendiamin, bezogen auf den Gesamtdiamingehalt, eingesetzt wird;
- teilkristallines, Polyamid hergestellt aus mindestens 50 Mol-% Terephthalsäure und einer Mischung aus Hexamethylendiamin und Bis-(4-aminocyclohexyl)-methan, wobei mindestens 10 Mol-%, bevorzugt wenigstens 15 Mol-% und besonders bevorzugt wenigstens 50 Mol-%, Hexamethylendiamin, bezogen auf den Gesamtdiamingehalt, eingesetzt wird;
- teilkristallines Polyamid, hergestellt aus mindestens 50 Mol-% Terephthalsäure und einer Mischung aus Hexamethylendiamin und Bis-(4-amino-3-methyl-cyclohexyl)-methan, wobei mindestens 10 Mol-%, bevorzugt wenigstens 15 Mol-% und besonders bevorzugt wenigstens 50 Mol-%, Hexamethylendiamin, bezogen auf den Gesamtdiamingehalt, eingesetzt wird.

Eine weitere bevorzugte Ausführungsform der Polyamidformmasse ist dadurch gekennzeichnet, dass die Komponente (A) gebildet wird durch ein teilkristallines Polyamid 6T/6I mit 50 bis 80 Mol-% Hexamethylenterephthalamid-Einheiten und 20 bis 50 Mol-% Hexamethylenisophthalamid-Einheiten, vorzugsweise mit 55 bis 75 Mol-% Hexamethylenterephthalamid-Einheiten und 25 bis 45 Mol-% Hexamethylenisophthalamid-Einheiten, insbesondere vorzugsweise mit 62 bis 73 Mol-% Hexamethylenterephthalamid-Einheiten und 25 bis 38 Mol-% Hexamethylenisophthalamid-Einheiten.

Erfindungsgemäss sind also als hochschmelzende Polyamide (A), weiter insbesondere folgende teilaromatische Copolyamide bevorzugt:
- teilkristallines Polyamid 6T/6I mit 50 bis 80 Mol-% Hexamethylenterephthalamid-Einheiten und 20 bis 50 Mol-% Hexamethylenisophthalamid-Einheiten;
- teilkristallines Polyamid 6T/6I mit 55 bis 75 Mol-% Hexamethylenterephthalamid-Einheiten und 25 bis 45 Mol-% Hexamethylenisophthalamid-Einheiten;
- teilkristallines Polyamid 6T/6I mit 62 bis 73 Mol-% Hexamethylenterephthalamid-Einheiten und 25 bis 38 Mol-% Hexamethylenisophthalamid-Einheiten;
- teilkristallines Polyamid 6T/6I mit 70 Mol-% Hexamethylenterephthalamid-Einheiten und 30 Mol-% Hexamethylenisophthalamid-Einheiten.

Eine weitere bevorzugte Ausführungsform der Polyamidformmasse ist dadurch gekennzeichnet, dass die Komponente (A) gebildet wird durch ein teilkristallines Polyamid 6T/66 mit 50 bis 80 Mol-% Hexamethylenterephthalamid-Einheiten und 20 bis 50 Mol-% Hexamethylenadipamid-Einheiten, vorzugsweise mit 50 bis 65 Mol-% Hexamethylenterephthalamid-Einheiten und 35 bis 50 Mol-% Hexamethylenadipamid-Einheiten insbesondere vorzugsweise mit 52 bis 62 Mol-% Hexamethylenterephthalamid-Einheiten und 38 bis 48 Mol-% Hexamethylenadipamid.

Erfmdungsgemäss sind also als hochschmelzende Polyamide (A), zudem insbesondere folgende teilaromatische Copolyamide bevorzugt:
- teilkristallines Polyamid 6T/66 mit 50 bis 80 Mol-% Hexamethylenterephthalamid-Einheiten und 20 bis 50 Mol-% Hexamethylenadipamid (66)-Einheiten;
- teilkristallines Polyamid 6T/66 mit 50 bis 65 Mol-% Hexamethylenterephthalamid-Einheiten und 35 bis 50 Mol-% Hexamethylenadipamid (66)-Einheiten;
- teilkristallines Polyamid 6T/66 mit 52 bis 62 Mol-% Hexamethylenterephthalamid-Einheiten und 38 bis 48 Mol-% Hexamethylenadipamid (66)-Einheiten;
- teilkristallines Polyamid 6T/66 mit 55 Mol-% Hexamethylenterephthalamid-Einheiten und 45 Mol-% Hexamethylenadipamid (66)-Einheiten.

Die Komponente (A) kann, gemäss einer weiteren bevorzugten Ausführungsform, auch durch ein teilkristallines ternäres Polyamid gebildet sein.

Entsprechend ist weiter bevorzugt, dass die Komponente (A) gebildet wird durch ein teilkristallines ternäres Polyamid 6T/6I/66 mit 50 bis 70 Mol-% Hexamethylenterephthalamid-, 5 bis 45 Mol-% Hexamethylenisophthalamid-Einheiten und 5 bis 45 Mol-% Hexamethylenadipamid-Einheiten.

Ebenfalls bevorzugt ist, dass die Komponente (A) gebildet wird durch ein 6T/6I/X mit mindestens 50 Mol-% Hexamethylenterephthalamid-, 0 bis 40 Mol-% Hexamethylenisophthalamid- und 10 bis 50 Mol-% aliphatische Einheiten der Formel NH-(CH₂)ₙ-1-CO-, wobei n = 6, 11 oder 12 ist.

Ebenfalls bevorzugt ist, dass die Komponente (A) gebildet wird durch ein 6T/6I/X mit mindestens 50 Mol-% Hexamethylenterephthalamid-, 10 bis 30 Mol-% Hexamethylenisophthalamid- und 10 bis 40 Mol-% aliphatische Einheiten der Formel - NH-(CH₂)ₙ-1-CO-, wobei n gleich 6, 11 oder 12 ist.

Ebenfalls bevorzugt ist, dass die Komponente (A) gebildet wird durch ein 6T/6I/X mit 52 bis 73 Mol-% Hexamethylenterephthalamid-, 0 bis 36 Mol-% Hexamethylenisophthalamid- und 12 bis 48 Mol-% aliphatische Einheiten der Formel - NH-(CH₂)ₙ-1-CO-, wobei n gleich 6, 11 oder 12 ist.

Ebenfalls bevorzugt ist, dass die Komponente (A) gebildet wird durch ein 6T/6I/X mit 52 bis 73 Mol-% Hexamethylenterephthalamid- und 10 bis 36 Mol-% Hexamethylenisophthalamid-, 12 bis 38 Mol-% aliphatische Einheiten der Formel -NH-(CH₂)ₙ₋₁-CO-, wobei n gleich 6, 11 oder 12 ist.

Gemäss einer weiteren bevorzugten Ausführungsform basiert die Komponente A auf einem teilaromatischen und teilkristallinen Polyamid, das bis zu 26 Mol-% aliphatische Einheiten enthält, die durch Kondensation von dimerisierten Fettsäuren mit bis zu 44 Kohlenstoffatomen und einem aliphatischen oder cycloaliphatischen Diamin, insbesondere mit Hexamethylendiamin herstellbar sind.

### Komponente (B):

Als Komponente (B) liegen in der Formmasse 1-15 Gew.-% Ethylen-Vinylacetat-Copolymer (EVA) vor. Das Ethylen-Vinylacetat-Copolymer (EVA) kann dabei teilweise verseift sein.

Eine bevorzugte Ausführungsform ist dadurch gekennzeichnet, dass der Anteil an Komponente (B) im Bereich von 1.5 -10 Gew.-% liegt, vorzugsweise im Bereich von 2-6 Gew.-%.

Eine weitere bevorzugte Ausführungsform ist dadurch gekennzeichnet, dass die Komponente (B) ein Ethylen-Vinylacetat-Copolymer mit einem Gehalt an Vinylacetat von 5-35 %, vorzugsweise 8-25 %, insbesondere vorzugsweise 10-20 % ist, wobei die Prozente jeweils auf die Gesamtmasse an Ethylen-Vinylacetat-Copolymer, inklusive gegebenenfalls vorhandener Pfropfung, bezogen sind.

Bevorzugtermassen verfügt das EVA über eine Molmasse im Bereich von 20'000 bis 500'000 g/mol, insbesondere bevorzugt im Bereich von 30'000 bis 300'000 g/mol.

Eine weitere bevorzugte Ausführungsform zeichnet sich dadurch aus, dass das Ethylen-Vinylacetat-Copolymer gepfropft ist, was insbesondere die Verträglichkeit mit dem Polyamid verbessert.

Bevorzugtermassen verfügt das Ethylen-Vinylacetat-Copolymer über Säure- oder Säureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht. Dabei werden dafür bevorzugtermassen Reagenzien ausgewählt aus der folgenden Gruppe eingesetzt: Acrylsäure, Methacrylsäure, Maleinsäure, Maleinsäureanhydrid, Maleinsäuremonobutylester, Fumarsäure, Aconitsäure, Glycidylacrylat, Glycidylmethacrylat und/oder Itaconsäureanhydrid. Vorzugsweise werden 0.1 bis 6.0 Gew.-% dieser Reagenzien, bevorzugt eines ungesättigten Anhydrids oder einer ungesättigten Carbonsäure an die Ethylen-Vinylacetat-Copolymere aufgepfropft, oder Carbonsäure oder Dicarbonsäureanhydrid oder dessen Vorstufe wird zusammen mit einem weiteren ungesättigten Monomeren aufgepfropft.

Die Pfropfung erfolgt besonders bevorzugt mit einem Reagenz ausgewählt aus der folgenden Gruppe: Acrylsäure, Methacrylsäure, Maleinsäureanhydrid, oder Kombinationen davon, vorzugsweise ist die Pfropfung ausgewählt als Acrylsäure.

Dabei verfügt das Ethylen-Vinylacetat-Copolymer bevorzugtermassen über eine Pfropfung in einem Bereich von 0.2-4.0 Gew.-%, insbesondere bevorzugt in einem Bereich von 0.5-2.5% Gew.-% , wobei die Gewichtsprozente jeweils auf die Gesamtmasse an Ethylen-Vinylacetat-Copolymer, inklusive Pfropfung, bezogen sind.

Bevorzugtermassen ist die Formmasse frei von weiterem Verträglichkeitsvermittler dann, wenn das verwendete EVA gepfropft ist.

Bevorzugt ist das EVA weiterhin zu weniger als 30%, besonders bevorzugt zu weniger als 10% verseift, d.h. der Anteil an Vinylalkoholgruppen ist bezogen auf die Summe der Vinylacetat- und Vinylalkoholgruppen im EVA (Komponente B) kleiner als 30 mol-%, besonders bevorzugt kleiner als 10 mol-%. Insbesondere ist bevorzugt, wenn das EVA unverseift vorliegt, d.h. der Verseifungsgrad beträgt 0%, und damit keine oder nahezu keine Vinylalkoholgruppen enthält.

Bevorzugtermassen ist das EVA weiterhin nicht vernetzt, d.h. die Formmassen sind frei von Vernetzern und Radikalbildnern.

Bevorzugtermassen findet ein EVA Verwendung, dessen Ethylen-Anteil 79-86 Gew.-% ist, dessen Vinylacetat-Gehalt 13-18 Gew.-% ist, und dessen Acrylsäure-Pfropfung 1-3 % ausmacht (jeweils auf das Gesamtgewicht bezogen).

Beispiele für kommerziell erhältliche EVA-Systeme sind folgende: Scona TPEV 1110 PB, Scona TPEV 1112 PB, Scona TPEV 2113 PB, Scona TPEV 5010 PB, Evatane 18-150, Evatane 20-20, Evantane 28-40, Ultrathene UE672, Ultrathene UE635000, Atea 1075A, Atea 1241, Atea 2842AC.

### Komponente (C):

Bevorzugtermassen liegt die Komponente (C) in einem Anteil von 15-65 Gew.-% vor, insbesondere vorzugsweise im Bereich von 20-60 Gew.-%.

In Komponente (C) sind vorzugsweise die faserförmigen Verstärkungsstoffe ausgewählt aus der folgenden Gruppe: Glasfasern, Basaltfasern, Titanatwhisker, Kohlenstoffasern, Graphitfasern, Aramidfasern, Nanotubes, oder Mischungen respektive oberflächenbehandelte Formen davon, jeweils mit kreisförmiger oder nicht-kreisförmiger Querschnittfläche, wobei bevorzugterweise Glasfasern ausgewählt sind, und wobei im Fall von flachen Glasfasern solche mit einem Abmessungsverhältnis von der Hauptquerschnittsachse zur senkrecht darauf stehender Nebenquerschnittsachse von mehr als 2 bevorzugt von 2 bis 8, insbesondere von 2 bis 5 bevorzugt eingesetzt werden, Weiterhin vorzugsweise sind in Komponente (C) die teilchenförmigen Füllstoffe ausgewählt sind aus der Gruppe bestehend aus: Titandioxid, Zinksulfid, Bariumsulfat, Bariumtitanat, Talk, Glimmer, Silikaten, Quarz, Glaskugeln, Glasflakes, Wollastonit, Kaolin, Kieselsäuren, Magnesiumcarbonat, Magnesiumhydroxid, Kreide, gemahlenem oder gefälltem Calciumcarbonat, Kalk, Feldspat, Metallpulver, insbesondere Eisenpulver, anorganische Pigmente, wie insbesondere Eisenoxid, Eisenmanganoxid, Metalloxide, insbesondere Spinelle, wie insbesondere Kupfereisenspinell, Kupferchromoxid, Kupferchromit (CuCr₂O₄), Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metallen oder Legierungen bzw. Keramiken, hohlkugeligen Silikatfüllstoffen, Aluminiumoxid, Bornitrid, Borcarbid, Aluminiumnitrid, Calciumfluorid und Mischungen oder oberflächenbehandelte Formen davon.

Weiterhin wird bevorzugt, wenn das Verhältnis der **faserförmigen Zuschlagsstoffe** zu den partikulären Zuschlagsstoffen im Bereich von 10:1 bis 1:10 oder im Bereich von 5:1 bis 1:5 liegt. Insbesondere wird bevorzugt, wenn Komponente ausschliesslich durch faserförmige Zuschlagsstoffe gebildet wird, d.h. keine partikulären Füllstoffe in der Formmasse vorhanden sind.

Bevorzugt ist Komponente (C) eine Glasfaser, die im Wesentlichen aus den Komponenten Siliciumdioxid, Calciumoxid, Magnesiumoxid und Aluminiumoxid aufgebaut ist oder besteht und das Gewichtsverhältnis SiO₂/(CaO+MgO) kleiner 2.7, bevorzugt kleiner 2.5 und insbesondere zwischen 2.1 und 2.4 ist. Insbesondere handelt es sich bei Komponente B1 um eine E-Glasfaser gemäss ASTM D578-00.

Erfmdungsgemäss kann es sich bei der Glasfaser auch um eine hochfeste Glasfaser handeln, die vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid beruht, wobei eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂) Boroxid (B₂O₃), Titandioxid (TiO₂) oder Lithiumoxid (Li₂O) bevorzugt wird. Die hochfeste Glasfaser besitzt bevorzugtermassen eine Zugfestigkeit von grösser oder gleich 4000 MPa, und/oder eine Reissdehnung von mindestens 5% und einen Zug-E-Modul von grösser 80 GPa. Konkrete Beispiele für diese hochfesten Glasfasern der Komponente sind S-Glasfasern von Owens Corning mit 910- oder 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die Glasfasern der Komponente (C) können in Form von Kurzfasern, bevorzugt in Form von Schnittglas mit einer Länge im Bereich von 0.2-20 mm, oder in Form von Endlosfasern vorliegen. Somit enthalten die Formmassen 0 bis 70 Gew.-%, bevorzugt 10 bis 65 Gew.-% und besonders bevorzugt 20 bis 60 Gew.-% einer Glasfaser (B1), die in Form von sogenannten Kurzfasern (z.B. Schnittglas mit einer Länge von 0.2-20 mm) oder Endlosfasern (Rovings) verwendet wird.

Die erfindungsgemässen Glasfasern der Komponente (C) haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5-20 µm, bevorzugt im Bereich von 6-17 µm und besonders bevorzugt im Bereich von 6-13 µm. Sie werden bevorzugt als Kurzglasfaser (Schnittglas mit einer Länge von 0.2 bis 20 mm, bevorzugt 2-12 mm) eingesetzt.

Bei den flachen Glasfasern der Komponente (C), also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70%, bevorzugt mindestens 80% und insbesondere bevorzugt zu mindestens 85% aus. Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die Glasfasern sind bevorzugtermassen mit einer für den jeweiligen Thermoplasten, insbesondere für Polyamid geeigneten Schlichte, beispielsweise enthaltend einen Haftvermittler auf Basis einer Amino- oder Epoxysilanverbindung, versehen.

Die gemäss einer weiteren bevorzugten Ausführungsform innerhalb der Komponente (C) als Roving eingesetzten hochfesten Glasfasern weisen bevorzugt einen Durchmesser von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5. Diese Endlosfasern, insbesondere bevorzugt innerhalb der Komponente (C), werden in die erfindungsgemässen Polyamidformmassen durch bekannte Verfahren zur Herstellung von langfaserverstärktem Stäbchengranulat (Faserlänge und Granulatlänge sind identisch) eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden. Zur Verstärkung der erfindungsgemässen Formmassen können auch endlose Fasern (Langglasfasern) mit geschnittenen Fasern (Kurzglasfasern) kombiniert werden.

Als **partikuläre Zuschlagsstoffe der Komponente (C)** kommen dem Fachmann in dieser Funktion bekannte Füllstoffe in Frage. Hierzu zählen insbesondere partikuläre Füllstoffe ausgewählt aus der Gruppe bestehend aus: Talk, Glimmer, Silikaten, Quarz, Wollastonit, Kaolin, Kieselsäuren, Magnesiumcarbonat, Magnesiumhydroxid, Kreide, gemahlenem oder gefälltem Calciumcarbonat, Kalk, Feldspat, anorganische Pigmente, wie z.B. Bariumsulfat, Zinkoxid, Zinksulfid, Lithopone und Titandioxid (Rutil, Anatas), Eisenoxid, Eisenmanganoxid, Metalloxide, insbesondere Spinelle, wie z.B. Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente wie Titan-Zink-Rutil, Nickel-Antimon-Titanat, Chrom-Antimon-Titanat, hart- oder weichmagnetische Metallen oder Legierungen bzw. Keramiken, hohlkugeligen Silikatfüllstoffen, Aluminiumoxid, Bornitrid, Borcarbid, Aluminiumnitrid, Calciumfluorid und Mischungen hiervon. Die Füllstoffe können auch oberflächenbehandelt sein.

Bevorzugtermassen verfügen die teilchenförmigen Zuschlagstoffe über eine mittlere Partikelgrösse (D50) im Bereich von 0.1-40 µm, bevorzugt im Bereich von 0.2-20 µm, insbesondere im Bereich von 0.3-10 µm. Bevorzugt wird eine Form der partikulären Füllstoffe, bei denen die Aspektverhältnisse L/b1 und L/b2 beide höchstens 10, insbesondere höchstens 5 sind, wobei die Aspektverhältnisse durch die Quotienten aus grösster Länge L des Teilchens zu dessen mittleren Breite b1 oder b2 beschrieben werden. Dabei liegen b1 und b2, die senkrecht zueinander angeordnet sind, in einer zur Länge L senkrechten Ebene.

Des weiteren bevorzugtermassen verfügen die teilchenförmigen Zuschlagstoffe der Komponente (C) über einen von null verschiedenen Absorptionskoeffizienten für UV-, VIS-oder IR-Strahlung, insbesondere für Laserstrahlung, bevorzugt bei einer Wellenlänge im Bereich von 1064 nm, bevorzugtermassen mit einer Absorptionsfähigkeit im sichtbaren und/oder infraroten Strahlungsbereich mit einem Absorptionskoeffizienten von wenigstens 0.05, bevorzugt wenigstens 0.1, und insbesondere bevorzugt wenigstens 0.2.

Besonders bevorzugt werden teilchenförmigen Zuschlagstoffe der Komponente (C) anorganische Weisspigmente verwendet. Insbesondere ist bevorzugt, dass Komponente (C) ausschliesslich aus diesen Weisspigmenten gebildet wird. In diesem Fall ist oder besteht Komponente (C) ausschliesslich aus den anorganischen Weisspigmenten, ausgewählt aus der Gruppe Bariumsulfat, Zinkoxid, Zinksulfid, Lithopone und Titandioxid (Rutil, Anatas), wobei die, Weisspigmente bevorzugtertnassen über eine mittlere Partikelgrösse (D50) im Bereich von 0.1-40 µm, bevorzugt im Bereich von 0.1-20 µm, insbesondere im Bereich von 0.1-10 µm verfügen.

### Komponente (D):

Der Polyamidformmasse können weitere von Komponente (A) verschiedene Polymere, insbesondere von (B) verschiedene Schlagzähmodifier, in einer Menge von 0 bis 20 Gew.-% zugesetzt werden, vorzugsweise im Bereich von 5-15 Gew.-%, insbesondere vorzugsweise im Bereich von 5-10 Gew.-%.

Die von (A) verschiedenen Polymere (Komponente D), die in Form einer Mischung mit dem Polyamidbestandteil (A) ebenfalls vorhanden sein können, sind vorzugsweise ausgewählt aus der Gruppe bestehend aus: Polycarbonat, Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon (insbesondere des Typs PSU, PESU, PPSU), Polyphenylenether, Polyphenylensulfid, Polyphenylenoxid, Flüssigkristalline Polymere, Polyetherketon, Polyetheretherketon, Polyimid, aliphatische Polyamide mit einem Schmelzpunkt unter 270 °C, amorphe Polyamide mit einer Glasübergangstemperatur von 90 bis 200°C und einer Schmelzenthalpie von höchstens 4 J/g, Polyamidimid, Polyesterimid, Polyetheramid, Polyesteramid, Polyetheresteramid, Polyurethan (insbesondere des Typs TPU, PUR), Polysiloxan, Polyacrylat, Polymethacrylat sowie Mischungen oder Copolymere auf Basis solcher Systeme. Bevorzugte aliphatische Polyamide innerhalb der Komponenten (D) sind PA 56, PA 66, PA 610, PA 612, PA 6/12, PA 12, PA11, PA 1010, PA 1012 und PA 1212. Bevorzugte amorphe Polyamide innerhalb der Komponente (D) sind PA 6I/6T, PA 10I/10T, PA 10I/10T/BACI/BACT (BAC = 1,3-Bis(aminomethyl)cyclohexan), PA MACMI/12 und PA MACM12. Besonders bevorzugt ist PA 6I/6T mit einem Gehalt an Isophthalsäure im Bereich von 50 bis 100 mol-% und insbesondere im Bereich von 60 bis 80 mol-%, wobei die mol-% jeweils bezogen sind auf den Disäureanteil, d.h. auf die Summe aus Isophthalsäure und Terephthalsäure.In einer weiteren Ausführungsform enthält die erfindungsgemässe Formmasse als Komponente (D) bis zu 20 Gew.-% bezogen auf die gesamte Formmasse eines oder mehrerer von (B) verschiedener Schlagzähmodifikatoren (SZM). Der Schlagzähmodifier kann ein Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein. Der Schlagzähmodifier (D) kann auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und copolymeres wie Ethylen-Propylen-, Ethylen-Propylen-Dien- und Ethylen-Octen- Kautschuk oder ein unpolares oder polares Olefin-Homopolymeres und -Copolymeres, das durch Pfropfen oder Copolymerisation mit Säureanhydriden, (Meth)acrylsäure und deren Ester entstanden ist, sein. Der Schlagzähmodifier (D) kann auch ein carbonsäure-funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen sein kann, einschliesslich solchen Copolymeren, in denen die Säuregruppen teilweise mit Metallionen neutralisiert sind.

Als Beispiele der auf Styrol beruhenden Blockcopolymere seien Styrol-(ethylen-butylen)-Zweiblock und Styrol-(ethylen-butylen)-styrol-Dreiblock-Copolymere genannt.

Gemäss einer weiteren bevorzugten Ausführungsform sind die erfindungsgemässen Formmassen dadurch gekennzeichnet, dass die Komponente (D) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12- a -Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente (D) um Ethylen-Propylen-Kautschuk und/oder LLDPE und/oder VLDPE handelt.

Alternativ oder zusätzlich (beispielsweise in Mischung) kann (D) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1) heptadien, Hexadien-1.4, Dicyclopentadien und/oder insbesondere 5-Ethylidennorbornen.

In Frage als Bestandteil für die Komponente (D) kommen zudem auch Ethylen-Acrylat- oder Ethylen-Butylen-Acrylat-Copolymere.

Bevorzugtermassen verfügt die Komponente (D) über Bestandteile mit Carbonsäure- oder Carbonsäureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester in einer Konzentration eingebracht werden, die für eine gute Anbindung an das Polyamid ausreicht, wobei dafür Reagenzien ausgewählt aus der folgenden Gruppe bevorzugtermassen eingesetzt werden: Maleinsäure, Maleinsäureanhydrid, Maleinsäuremonobutylester, Fumarsäure, Aconitsäure und/oder Itaconsäureanhydrid.

Vorzugsweise werden 0.1 bis 4.0 Gew.-% eines ungesättigten Anhydrids an die Schlagzähkomponente als Bestandteil von (D) aufgepfropft oder das ungesättigte Dicarbonsäureanhydrid oder dessen Vorstufe wird zusammen mit einem weiteren ungesättigten Monomeren aufgepfropft. Generell ist der Pfropfgrad bevorzugtermassen in einem Bereich von 0.1-1.0%, insbesondere bevorzugt in einem Bereich von 0.3-0.7%. Auch möglich als Bestandteil der Komponente (D) ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.3-0.7%. Die oben angegebenen möglichen Systeme für die Komponente können auch in Mischungen verwendet werden.

Die als Komponente (D) eingesetzten von (B) verschiedenen Schlagzähmodifikatoren schliessen damit Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolymere, Poly(ethylen-ethylacrylat) (EEA), Ethylen-Octen-Copolymer, Ethylen-Buten-Copolymer, Ethylen-Hexen-Copolymer, Ethylen-Propylen-Dien-Terpolymere sowie Kombinationen der genannten Polymere. Beispiele für kommerziell erhältliche von Komponente (B) verschiedene Schlagzähmodifier, welche im Rahmen der Bestandteile der Komponente (D) eingesetzt werden können, sind: TAFMER MC201: g-MAH (-0.6 %) Blend aus 67% EP Copolymer (20 Mol-% Propylen) + 33 % EB Copolymer (15 mol-% Buten-1)); TAFMER MH5010: g-MAH (-0.6 %) Ethylen-Butylen-Copolymer; TAFMER MH7010: g-MAH (0.7 %) Ethylen-Butylen-Copolymer; Mitsui. TAFMER MH7020: g-MAH (0.7 %) EP-Copolymer von Mitsui Chemicals; EXXELOR VA1801: g-MAH (0.7 %) EP-Copolymer; EXXELOR VA1803: g-MAH (0.5-0.9 %) EP Copolymer, amorph; EXXELOR VA1810: g-MAH (0.5 %) EP-Copolymer; EXXELOR MDEX 94-1 1: g-MAH (0.7 %) EPDM, Exxon Mobile Chemical; FUSABOND MN493D: g-MAH (0.5 %) Ethylen-Octen-Copolymer; FUSABOND A EB560D (g-MAH) Ethylen-n-butyl-acrylat-copolymer; ELVALOY, DuPont; Kraton FG1901GT: g-MAH (1.7%) SEBS mit einem S zu EB-Verhältnis von 30:70; Lotader AX8840: Ethylen-glycidylmethacrylat-Copolymer.

Bevorzugt wird auch ein Ionomer, in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

### Komponente (E):

Die Formmasse enthält in einer weiteren bevorzugten Ausführungsform weiterhin noch 8 - 20 Gew.-%, bevorzugt 9 - 18 Gew.-% und insbesondere 11 - 16 Gew.-% eines Flammschutzmittels. Bevorzugtermassen ist das Flammschutzmittel halogenfrei. Das Flammschutzmittel in der Komponente (E) umfasst dabei bevorzugtermassen 60 - 100 Gew.-%, bevorzugt 70 - 98 Gew.-%, insbesondere 80 - 96 Gew.-% eines Phosphinsäuresalzes und/oder Diphosphinsäuresalzes (Komponente (El)) sowie 0 - 40 Gew.-%, bevorzugt 2 - 30 Gew.-%, insbesondere 4 - 20 Gew.-% eines stickstoffhaltigen Synergisten und/oder eines Stickstoff und Phosphor enthaltenden Flammschutzmittels (Komponente (E2)). Bei Komponente (E2) handelt es sich bevorzugt um Melamin oder Kondensationsprodukte des Melamins, wie z.B. Melem, Melam, Melon, oder um Umsetzungsprodukte von Melamin mit Polyphosphorsäure oder um Umsetzungsprodukte von Kondensationsprodukten des Melamins mit Polyphosphorsäure oder Gemische davon. Als Komponente (E2) wird insbesondere Melaminpolyphosphat bevorzugt. Derartige Flammschutzmittel sind aus dem Stand der Technik bekannt. Hierzu wird auf die DE 103 46 3261 verwiesen.

Bevorzugt wird als Komponente E1 ein Aluminium-, Calcium-, Zink- oder Barium phosphinat und/oder Diphosphinat eingesetzt, wobei die Kohlenwasserstoffsubsituenten am Phosphor bevorzugt lineare oder verzweigte Alkylreste mit 1 bis 8 C-Atomen und/oder Arylreste mit 6 bis 15 C-Atomen sind.

### Komponente (F):

Unter den Additiven der Komponente (F) sind Zuschlagsstoffe zu verstehen, die verschieden von den Komponenten (A), (B), (C), (D) und/oder (E) sind. Gemäss einer bevorzugten Ausführungsform liegt der Anteil an Additiven der Komponente (F) im Bereich von 0-4 Gew.-%.

Die Additive der Komponente (F) sind weiterhin bevorzugtermassen ausgewählt aus der folgenden Gruppe oder einer Mischung davon: Haftvermittler, Kristallisations-Beschleuniger oder -Verzögerer, Antioxidantien, Antiozonantien, Lichtschutzmitteln, Hitzestabilisatoren, wie z.B. Phenole, Phosphite, Kupferhalogenide, Ceroxidhydrate, Lathansalze, UV-Stabilisatoren, UV-Absorber, UV-Blocker, Gleitmittel, Entformungsmittel, Weichmacher, Verarbeitungshilfsmittel, Antistatika, Pigmente, Farb- und Markierungsstoffe, Nanoteilchen in Plättchenform, Leitfähigkeitsadditive, wie Russ, Graphitpulver oder Kohlenstoffnanofibrillen, Residuen aus Polymerisationsverfahren wie Katalysatoren, Salze und deren Derivate, sowie Regler wie Monosäuren oder Monoamine, und/oder wobei es sich um sauerstoff-, stickstoff- oder schwefelhaltige Metallverbindungen als Stabilisatoren, wobei Metalle wie Aluminium, Calcium, Barium, Natrium, Kalium, Magnesium und/oder Zink bevorzugt sind, und insbesondere bevorzugt Verbindungen ausgewählt aus der Gruppe der Oxide, Hydroxide, Carbonate, Silikate, Borate, Phosphate, Stannate sowie Kombinationen oder Mischungen dieser Verbindungen, wie Oxid-Hydroxide oder Oxid-Hydroxid-Carbonate sind.

Weiterhin betrifft die vorliegende Erfindung ein **Verfahren** zur Herstellung respektive ein Verarbeitungs- oder Bereitstellungsverfahren einer Polyamidformmasse wie sie oben dargestellt ist, dadurch gekennzeichnet, dass wenigstens die Komponenten (A)-(B), gegebenenfalls auch eine, mehrere oder alle der Komponenten (C)-(F), vorgelegt werden und bei einer Schmelzetemperatur (Massetemperatur T_{M}) von wenigstens 290°C, bevorzugt wenigstens 300°C, insbesondere bevorzugt von wenigstens 310°C gemischt werden, bevorzugt in einem Extrusionsprozess. Bevorzugt kommt auch ein Verarbeitungsverfahren, bevorzugt ein Spritzgussverfahren, zum Einsatz, bei dem eine Mischung der Komponenten (A)-(F) eingesetzt und bei einer Schmelzetemperatur (Massetemperatur T_{M}) von wenigstens 290°C, bevorzugt wenigstens 300°C, insbesondere bevorzugt von wenigstens 310°C gemischt und/oder verarbeitet wird.

Weiterhin ist bevorzugt, wenn bei einer Massetemperatur T_{M} von wenigstens 290°C, vorzugsweise wenigstens 300°C, insbesondere bevorzugt wenigstens 310°C während einer Zeitdauer von wenigstens 10 Sekunden, vorzugsweise im Bereich von wenigstens 20 Sekunden oder 30 Sekunden, vermischt wird, vorzugsweise in einem Schneckenextruder, insbesondere einem Ein- oder Zweiwellenextruder, einem Multiwellenextruder oder einer Spritzgussmaschine.

Weiterhin betrifft die vorliegende Erfindung ein Bauteil hergestellt aus einer Polyamidformmasse wie sie oben dargestellt wurde, wobei es sich vorzugsweise beim Bauteil um ein Gehäuse oder ein tragendes Strukturelement, insbesondere für Elektrik- und/oder Elektronikanwendungen oder im Automobilbereich handelt, insbesondere um Konnektoren, Lautsprecher, Mikrophone, Rahmenteile.

Zu guter Letzt betrifft die vorliegende Erfindung auch noch Verwendung von Ethylen-Vinylacetat-Copolymer zur Einstellung der Fliessfähigkeit eines thermoplastischen Polyamids ausgewählt aus der folgenden Gruppe: aliphatisches Polyamid, cycloaliphatisches Polyamid, teilaromatisches Polyamid, oder eine Mischung davon, mit einer Schmelztemperatur (Tₘ) von wenigstens 270°C und einer Schmelzenthalpie (ΔHm) im Bereich von 30-70 J/g, jeweils gemessen nach ISO-Norm 11357-1 am Granulat mit einer Aufheizrate von 20°C/min, wobei bezogen auf die Gesamtmasse das Ethylen-Vinylacetat-Copolymer in einem Anteil im Bereich von 1-10 Gew.-% eingesetzt wird. Bevorzugtermassen wird ein Ethylen-Vinylacetat-Copolymer mit einem Gehalt an Vinylacetat von 5-35 %, vorzugsweise 8-25 %, insbesondere vorzugsweise 10-20 % eingesetzt, wobei die Prozente jeweils auf die Gesamtmasse an Ethylen-Vinylacetat-Copolymer, inklusive gegebenenfalls vorhandener Pfropfung, bezogen sind.

Gemäss einer weiteren bevorzugten Ausführungsform der Verwendung ist das Ethylen-Vinylacetat-Copolymer gepfropft, vorzugsweise mit einem System ausgewählt aus der folgenden Gruppe: Acrylsäure, Methacrylsäure, Maleinsäureanhydrid, Glycidylgruppen, oder Kombinationen davon, vorzugsweise ausgewählt als Acrylsäure, wobei das Ethylen-Vinylacetat-Copolymer bevorzugtermassen eine Pfropfung im Bereich von 0.5-5 %, vorzugsweise im Bereich von 1-3 % aufweist, wobei die Prozente jeweils auf die Gesamtmasse an Ethylen-Vinylacetat-Copolymer, inklusive Pfropfung, bezogen sind. Eine besonders bevorzugte Ausführungsform ist dadurch gekennzeichnet, dass als Komponente (A) Polyamid 6T/66 (in einem Verhältnis im Bereich von 50:50-67:33, vorzugsweise mit einem Verhältnis im Bereich von oder von 55:45, vorzugsweise mit einem Schmelzpunkt von 310 °C, in einem Anteil von 39-69 Gewichtsprozent eingesetzt wird und die Komponente (B) als acrylsäuregepfropftes EVA in einem Anteil von 1-6 Gewichtsprozent, vorzugsweise kombiniert mit einem Anteil der Komponente (C) ausgewählt als Glasfasern im Bereich von 30-55 Gewichtsprozent.

Eine weitere besonders bevorzugte Ausführungsform ist dadurch gekennzeichnet, dass als Komponente (A) Polyamid 6T/6I (in einem Verhältnis im Bereich von 60:40-80:20, vorzugsweise mit einem Verhältnis von 70:30) in einem Anteil von 39-69 Gewichtsprozent eingesetzt wird und die Komponente (B) als acrylsäuregepfropftes EVA in einem Anteil von 1-6 Gewichtsprozent, vorzugsweise kombiniert mit einem Anteil der Komponente (C) ausgewählt als Glasfasern im Bereich von 30-55 Gewichtsprozent.

Eine weitere besonders bevorzugte Ausführungsform ist dadurch gekennzeichnet, dass als Komponente (A) Polyamid 10T/6T (in einem Verhältnis im Bereich von 70:30-90:10, vorzugsweise mit einem Verhältnis von 85:15) in einem Anteil von 39-69 Gewichtsprozent eingesetzt wird und die Komponente (B) als acrylsäuregepfropftes EVA in einem Anteil von 1-6 Gewichtsprozent, vorzugsweise kombiniert mit einem Anteil der Komponente (C) ausgewählt als Glasfasern im Bereich von 30-55 Gewichtsprozent.

Weitere Ausführungsformen sind in den abhängigen Ansprüchen angegeben.

### BESCHREIBUNG BEVORZUGTER AUSFÜHRUNGSFORMEN

Bevorzugte Ausführungsformen der Erfindung werden im Folgenden anhand der Ausführungsbeispiele beschrieben, die lediglich zur Erläuterung dienen und nicht einschränkend auszulegen sind.

### Beispiele B1 bis B13 und Vergleichsbeispiele VB1 bis VB6:

Die in den Tabellen 3 bis 5 angegebenen Komponenten werden in einem zweiwelligen Extruder der Firma Werner und Pfleiderer mit einem Schneckendurchmesser von 25 mm bei vorgegebenen Prozessparametern (siehe Tabelle 1) compoundiert, wobei die Polyamidgranulate sowie die Zusatzstoffe in die Einzugszone dosiert werden, während die Glasfaser über einen Sidefeeder 3 Gehäuseeinheiten vor der Düse in die Polymerschmelze dosiert wird. Die Compounds zusammengefasst in Tabelle 3, 4 und 5 wurden als Strang aus einer Düse mit 2.5 mm Durchmesser abgezogen und nach Wasserkühlung granuliert. Das Granulat wird 24 Stunden bei 110°C im Vakuum von 30 mbar getrocknet.

**Tabelle 1: Prozessparameter Compoundierung**

| **Parameter [Einheit]** | B1, B2, B6, VB1, VB2, VB4 | B3-B5, B7, VB3, VB5 | B9, VB9 |
|---|---|---|---|
| Temperatur Zone 1 [°C] | 80-100 | 80-100 | 80-100 |
| Temperatur Zone 2 [°C] | 280 | 290 | 280 |
| Temperatur Zone 3 bis 10 [°C] | 320-330 | 330-340 | 320-330 |
| Temperatur Zone 11 [°C] | 310-320 | 320-330 | 310-320 |
| Temperatur Zone 12 [°C] | 310 | 320 | 310 |
| Temperatur Düsenkopf [°C] | 310 | 320 | 310 |
| Durchsatz [kg/h] | 10 | 10 | 10 |
| Schneckendrehzahl [U/min] | 180 | 180 | 180 |

Die Compounds werden mit einer Spritzgussmaschine Arburg Allrounder 320-210-750 zu Probekörpern bei definierten Zylindertemperaturen der Zonen 1 bis 4 und einer definierten Werkzeugtemperatur (siehe Tabelle 2) verspritzt.

**Tabelle 2: Masse- und Werkzeugtemperatur bei der Spritzgussverarbeitung**

| **Beispiel** | Werkzeugtemperatur für übrige Probekörper [°C] | Werkzeugtemperatur für Fliessspiralen [°C] | Massetemperatur alle Probekörper [°C] |
|---|---|---|---|
| B1, B2, B6, VB1, VB2, VB4 | 100 | 40 | 300 |
| B3-B5, B7, VB3, VB5 | 130 | 40 | 330 |
| B9, VB9 | 120 | 40 | 320 |

### Legende:

- PA-1: Polyamid 6T/66 mit einem molaren Verhältnis von Terephthalsäure zu Adipinsäure von 55:45 und einem Schmelzpunkt Tm von 310°C. ηᵣₑₗ = 1.68, ΔHm = 62 J/g
- PA-2: Polyamid 6T/6I mit einem molaren Verhältnis von Terephthalsäure zu Isophthalsäure von 70:30; Teilkristallines Polyamid auf Basis von TPS, IPS und HMDA, Tm = 325°C, ηᵣₑₗ = 1.58, ΔHm = 55 J/g.
- PA-4: Polyamid 6T/6I mit einem molaren Verhältnis von Terephthalsäure zu Isophthalsäure von 70:30, Oligomer mit Mn von 1000 g/mol.
- PA-5: Polyamid 10T/6T mit einem molaren Verhältnis von Decandiamin zu Hexandiamin von 85:15; teilkristallines Polyamid mit ηᵣₑₗ = 1.65, ΔHm = 64 J/g
- EVA-1: Mit 2 Gew.-% Acrylsäure gepfropftes, unverseiftes Ethylen-Vinylacetat-Copolymer, Scona TPEV 1110 PB, Vinylacetat-Gehalt: 14 Gew.-%.
- SZM-1: Lotader AX 8840 (Ethylen-co-GMA)
- Glasfaser: Vetrotex 995 EC 10-4.5, Glasfaser mit runder Querschnittsfläche eines Durchmessers von 10 µm und einer mittleren Länge von 4.5 mm.
- Stabilisator-1: Hostanox PAR24 / Irganox 1098 (1:1)
- Stabilisator-2: Kupferiodid / Kaliumiodid
- Additiv-1: Kaolin
- Additiv-2: Alugel 34-TH
- FSM-1: Halogenfreies Flammschutzmittel, Exolit OP1230, Clariant
- FSM-2: Halogenfreies Flammschutzmittel, Melapur 200, BASF

**Tabelle 3 (Teil 1)**

| **Komponenten** | **Einheit** | **B1** | **B2** | **B3** | **B4** | **B5** | **B6** | **B7** | **VB1** | **VB2** |
|---|---|---|---|---|---|---|---|---|---|---|
| PA-1 | Gew.-% | 65.37 | 63.37 | | | | 61.37 | | 69.37 | 65.37 |
| PA-2 | Gew.-% | | | 58.62 | 56.62 | 53.62 | | 50.62 | | |
| PA-4 | Gew.-% | | | | | | | | | 4 |
| PA-5 | Gew.-% | | | | | | | | | |
| EVA-1 | Gew.-% | 4 | 6 | 1 | 3 | 6 | 4 | 3 | | |
| SZM-1 | Gew.-% | | | | | | 4 | 6 | | |
| Glasfaser | Gew.-% | 30 | 30 | 40 | 40 | 40 | 30 | 40 | 30 | 30 |
| Stabilisator-1 | Gew.-% | 0.63 | 0.63 | | | | 0.63 | | 0.63 | 0.63 |
| Stabilisator-2 | Gew.-% | | | 0.18 | 0.18 | 0.18 | | 0.18 | | |
| Additiv-1 | Gew.-% | | | 0.2 | 0.2 | 0.2 | | 0.2 | | |
| Additiv-2 | Gew.-% | | | | | | | | | |
| FSM-1 | Gew.-% | | | | | | | | | |
| FSM-2 | Gew.-% | | | | | | | | | |
| Massetemperatur T_{M} (Extrusion) | °C | 312 | 314 | 328 | 326 | 325 | 311 | 326 | 314 | 311 |
| MVR (330°C/10kg) | cm³/10 min | 260 | 366 | 98 | 175 | 470 | 164 | 88 | 64 | 156 |
| MVR (330°C/5kg) | cm³ /10 min | | | | | | | | | |
| Zug-E-Modul | MPa | 9420 | 9290 | 13750 | 13420 | 13040 | 8540 | 11780 | 8530 | 9300 |
| Bruchfestigkeit | MPa | 162 | 161 | 234 | 227 | 210 | 149 | 201 | 148 | 136 |
| Bruchdehnung | % | 2.8 | 2.7 | 2.3 | 2.3 | 2.2 | 2.8 | 2.7 | 3.1 | 1.8 |
| Schlagzähigkeit 23°C | kJ/m² | 54 | 60 | 75 | 76 | 68 | 69 | 90 | 38 | 28 |
| Kerbschlagzähigkeit 23°C | kJ/m2 | 7 | 7 | 10 | 10 | 10 | 9 | 13 | 5.4 | 4.4 |
| HDT A (1.8 Mpa) | °C | 276 | 280 | | | | 276 | | 227 | 249 |
| HDT C (8 MPa) | °C | 140 | 150 | | | | 126 | | 96 | 106 |
| Fliesslänge (Spirale 1.5 x 10 mm) | mm | | | 199 | 245 | 320 | | 218 | | |
| Fliesslänge (Spirale 0.5 x 10 mm) | mm | 88 | 109 | 53 | 66 | 92 | 78 | 51 | 49 | 57 |

**Tabelle 3 (Teil 2):**

| **Komponenten** | **Einheit** | **VB3** | **VB4** | **VB5** | **B9** | **VB9** |
|---|---|---|---|---|---|---|
| PA-1 | Gew.-% | | 65.37 | | | |
| PA-2 | Gew.-% | 59.62 | | 53.62 | | |
| PA-4 | Gew.-% | | | | | |
| PA-5 | Gew.-% | | | | 52.7 | 56.7 |
| EVA-1 | Gew.-% | | | | 4 | |
| SZM-1 | Gew.-% | | 4 | 6 | | |
| Glasfaser | Gew.-% | 40 | 30 | 40 | 30 | 30 |
| Stabilisator-1 | Gew.-% | | 0.63 | | 0.5 | 0.5 |
| Stabilisator-2 | Gew.-% | 0.18 | | 0.18 | | |
| Additiv-1 | Gew.-% | 0.2 | | 0.2 | | |
| Additiv-2 | Gew.-% | | | | 0.3 | 0.3 |
| FSM-1 | Gew.-% | | | | 12 | 12 |
| FSM-2 | Gew.-% | | | | 0.5 | 0.5 |
| Massetemperatur T_{M} (Extrusion) | °C | 325 | 312 | 327 | 318 | 319 |
| MVR (330°C/10kg) | cm³ /10 min | 62 | 23 | 43 | | |
| MVR (330°C/5kg) | cm³/10 min | | | | 122 | 46 |
| MVR (275°C/5kg) | cm³ /10 min | | | | | |
| Zug-E-Modul | MPa | 13800 | 8700 | 12040 | 10100 | 10200 |
| Bruchfestigkeit | MPa | 237 | 150 | 205 | 131 | 140 |
| Bruchdehnung | % | 2.3 | 2.7 | 2.8 | 2.2 | 2.2 |
| Schlagzähigkeit 23°C | kJ/m² | 69 | 65 | 60 | 45 | 54 |
| Kerbschlagzähigkeit 23°C | kJ/m² | 10 | 9 | 14 | 8 | 7 |
| HDT A (1.8 Mpa) | °C | | | 260 | | |
| HDT C (8 MPa) | °C | | | 146 | | |
| Fliesslänge (Spirale 1.5 x 10 mm) | mm | 179 | | 162 | | |
| Fliesslänge (Spirale 0.5 x 10 mm) | mm | 45 | 42 | 38 | 64 | 56 |

Die Messungen wurden nach folgenden Normen und an folgenden Prüfkörpern durchgeführt.

Das thermische Verhalten (Schmelzpunkt (TM), Schmelzenthalpie (ΔHm), Glasumwandlungstemperatur (Tg)) wurde anhand der ISO-Norm 11357-1/-2 am Granulat bestimmt. Die Differential Scanning Calorimetry (DSC) wurde mit Aufheizrate von 20 °C/min durchgeführt.

Die **relative** Viskosität (ηᵣₑₗ) wurde bestimmt nach DIN EN ISO 307 an Lösungen von 0,5 g Polymer gelöst in 100 ml m-Kresol bei einer Temperatur von 20°C.

### Zug-E-Modul, Bruchfestigkeit und Bruchdehnung:

Messung mit einer Zuggeschwindigkeit von 50 mm/min (unverstärkte Varianten) oder einer Zuggeschwindigkeit von 5 mm/min (verstärkte Varianten).
ISO-Zugstab, Norm: ISO/CD 3167, Typ A1, 170 x 20/10 x 4 mm, Temperatur 23 °C.

Zug-E-Modul, Bruchfestigkeit und Bruchdehnung wurden nach ISO 527 mit einer Zuggeschwindigkeit von 1mm/min (Zug-E-Modul) bzw. mit einer Zuggeschwindigkeit von 50 mm/min (unverstärkte Varianten) oder einer Zuggeschwindigkeit von 5 mm/min (verstärkte Varianten; Bruchfestigkeit, Bruchdehnung) am ISO-Zugstab, Norm: ISO/CD 3167, Typ A1, 170 x 20/10 x 4mm bei Temperatur 23°C bestimmt.

**Schlagzähigkeit** und **Kerbschlagzähigkeit** nach Charpy wurden nach ISO 179/keU am ISO-Prüfstab, Norm: ISO/CD 3167, Typ B1, 80 x 10 x 4mm bei einer Temperatur von 23 °C gemessen.

**Die Wärmeformbeständigkeit HDT A (1,8 MPa) HDT B (0.45 MPa) und HDT C (8 MPa)** wurden gemäss DIN EN ISO 75-1,-2,-3 (Vorläufer: DIN 53461) am ISO-Schlagstab mit der Dimension 80x10x4 mm durchgeführt.

Der **MVR (Melt Volume Rate)** wurde nach ISO 1133 bei unterschiedlichen Temperaturen und Belastungen bestimmt, die Tabelle 3 zu entnehmen sind.

Der Fliesstest dient zum Vergleich der Fliessfähigkeit von thermoplastischen Kunststoffen beim Spritzgiessen. Für den Test werden zwei verschiedene Spiralformen mit einem Querschnitt von 10 x 1.5 mm bzw. 10 x 0.5 mm verwendet. An den Formteilen kann der Fliessweg anhand der eingravierten Skala abgelesen werden.

Die **Fliesslängen** [mm] wurden mittels einer Krauss-Maffei 50-55 C2 (Durchmesser des Schneckenzylinders: 20 mm) bestimmt. Es wurden Fliessspiralen der Dimension 0,5mm x 10 mm (Nachdruck: 1500 bar: Kühlzeit: 15 sec) sowie 1.5 mm x 10 mm (Nachdruck: 1000 bar: Kühlzeit: 20 sec) bei den in Tab. 2 angegebenen Masse- und Werkzeugtemperaturen angefertigt. Die Nachdruckzeit beträgt für beide Typen von Fliessspiralen 5 Sekunden, die Schneckendrehzahl 100 U/min.

Die **Massetemperatur T_{M}** (Extrusion) wird an der aus der Düse des Extruders austretenden Schmelze mit einem portablen TESTO-Temperaturmessgerät ausgerüstet mit Stechthermometer (Thermoelement) bestimmt, indem die Thermometerspitze solange in die Schmelze eingetaucht wird, bis sich ein konstanter Temperaturwert am Display ablesen lässt.

### Diskussion der Resultate der Tabelle:

Wie die Ergebnisse in der Tabelle 3 zeigen wird durch die Verwendung von EVA in den erfindungsgemässen Formmassen der MVR und die Fliesslänge erhöht. Setzt man der Formmasse von VB1 4% EVA zu, so wird der MVR von 64 auf 266 cm³/10 min und die Fliesslänge von 49 auf 88 mm erhöht. Mit steigender Konzentration an EVA werden auch grössere Zunahmen beim MVR und der Fliesslänge beobachtet. So werden mit 6 % EVA wie in Beispiel B2 ein MVR von 366 cm³ /10 min und eine Fliesslänge 109 mm erreicht. Zu Vergleichszwecken wird in VB2 ein Oligomer in einer Konzentration von 4% zur Verbesserung der Fliesseigenschaften eingesetzt. Die Werte für den MVR und die Fliesslänge werden mit dem Oligomer zwar gegenüber VB1 verbessert, liegen aber deutlich tiefer als bei Verwendung von EVA, d.h. EVA wirkt sehr effizient, was die Fliessverbesserung angeht. Aus dem Vergleich der Beispiele B3 bis B5 mit VB3 geht hervor, dass mit zunehmender Konzentration an EVA rasch steigende MVR-Werte und Fliesslängen erhalten werden.

Die Verwendung eines Schlagzähmodifiers kann ebenfalls das Fliessverhalten der Formmassen beeinflussen. Der in VB4 und VB5 eingesetzte reaktive SZM reduziert den MVR und die Fliesslänge der Formmassen massgeblich, was durch Vergleich mit VB1 und VB3 offensichtlich wird. Dennoch gelingt es durch Einsatz von EVA das Fliessverhalten, wie die Beispiele B6 und B7 belegen, deutlich zu verbessern. Auch bei an und für sich schwierig zu verarbeitenden flammgeschützten Formmassen wird das Fliessverhalten durch EVA signifikant verbessert, wie ein Vergleich von B9 mit VB9 ergibt.

## Patentansprüche

1. Polyamidformmasse aus den folgenden Komponenten:
(A) 29 - 89 Gew.-% wenigstens eines teilkristallinen thermoplastischen Homo- oder Co-Polyamids ausgewählt aus der folgenden Gruppe: aliphatisches Polyamid, cycloaliphatisches Polyamid, teilaromatisches Polyamid, oder eine Mischung davon, mit einer Schmelztemperatur (Tₘ) von wenigstens 270°C und einer Schmelzenthalpie (ΔHm) im Bereich von 30-70 J/g, jeweils gemessen nach ISO-Norm 11357-1 am Granulat mit einer Aufheizrate von 20°C/min;
(B) 1 - 5 Gew.-% Ethylen-Vinylacetat-Copolymer;
(C) 10 - 70 Gew.-% Füll- und Verstärkungsstoffe ausgewählt aus der folgenden Gruppe: faserförmige Verstärkungsstoffe, teilchenförmige Füllstoffe sowie Mischungen davon;
(D) 0 - 20 Gew.-% Schlagzähmodifikator verschieden von (B) und/oder Polymere verschieden von (A);
(E) 0 - 20 Gew.-% Flammschutzmittel
(F) 0 - 5 Gew.% Additive
wobei die Summe der Komponenten (A)-(F) 100 Gewichtsprozent ausmacht.

2. Polyamidformmasse nach Anspruch 1, **dadurch gekennzeichnet, dass** der Anteil an Komponente (B) im Bereich von 1.5-10 Gew.-% liegt, vorzugsweise im Bereich von 2-6 Gew.-%,
und/oder dass die Komponente (B) ein Ethylen-Vinylacetat-Copolymer mit einem Gehalt an Vinylacetat von 5-35 %, vorzugsweise 8-25 %, insbesondere vorzugsweise 10-20 % ist, wobei die Prozente jeweils auf die Gesamtmasse an Ethylen-Vinylacetat-Copolymer, inklusive gegebenenfalls vorhandener Pfropfung, bezogen sind, und wobei vorzugsweise das Ethylen-Vinyl Acetat-Copolymer eine Molmasse im Bereich von 20'000-500'000 g/mol, insbesondere vorzugsweise im Bereich von 30'000-300'000 g/mol aufweist.

3. Polyamidformmasse nach einem der vorhergehenden Ansprüche, **dadurch gekennzeichnet, dass** das Ethylen-Vinylacetat-Copolymer der Komponente (B) gepfropft ist, vorzugsweise mit einem System ausgewählt aus der folgenden Gruppe: Acrylsäure, Methacrylsäure, Maleinsäure, Maleinsäureanhydrid, Maleinsäuremonobutylester, Fumarsäure, Aconitsäure, Glycidylacrylat, Glycidylmethacrylat und/oder Itaconsäureanhydrid, oder Kombinationen davon, vorzugsweise ausgewählt als Acrylsäure, wobei das Ethylen-Vinylacetat-Copolymer bevorzugtermassen eine Pfropfung im Bereich von 0.2-4 %, vorzugsweise im Bereich von 0.5-2.5 % aufweist, wobei die Prozente jeweils auf die Gesamtmasse an Ethylen-Vinylacetat-Copolymer, inklusive Pfropfung, bezogen sind.

4. Polyamidformmasse nach einem der vorhergehenden Ansprüche, **dadurch gekennzeichnet, dass** es sich bei Komponente (A) ausschliesslich um ein aliphatisches und/oder teilaromatisches, teilkristallines Polyamid mit einer Schmelzenthalpie (ΔHm) im Bereich von 40-65 J/g, und/oder mit einer Schmelztemperatur (Tₘ) im Bereich von 280°C - 340°C, insbesondere vorzugsweise im Bereich von 290°C-330 °C, jeweils gemessen nach ISO-Norm 11357-11-2 am Granulat mit einer Aufheizrate von 20 °C/min, handelt oder eine Mischung solcher Polyamide.

5. Polyamidformmasse nach einem der vorhergehenden Ansprüche, **dadurch gekennzeichnet, dass** die Komponente (A) im wesentlichen oder gänzlich vollständig aus einem teilaromatischen, teilkristallinen Polyamid mit einer Schmelztemperatur (Tₘ) gemessen nach ISO-Norm 11357-11-2 am Granulat mit einer Aufheizrate von 20 °C/min, von wenigstens 290 °C besteht, aufgebaut aus:
(A1) 25 - 100 Mol-% Terephthalsäure, bezogen auf den Gesamtgehalt an anwesenden Säuren,
0 - 75 Mol-%, bezogen auf den Gesamtgehalt an anwesenden Säuren, wenigstens einer Dicarbonsäure ausgewählt aus der Gruppe:
von Terephthalsäure verschiedene aromatische Dicarbonsäure mit 8 bis 20 Kohlenstoffatomen, aliphatische Dicarbonsäure mit 6 bis 36 Kohlenstoffatomen, cycloaliphatische Dicarbonsäure mit 8 bis 20 Kohlenstoffatomen oder eine Mischung davon,
(A2) 25 - 100 Mol-%, bezogen auf den Gesamtgehalt an anwesenden
Diaminen, wenigstens eines aliphatischen Diamins mit 4 bis 36 Kohlenstoffatomen,
0- 75 Mol-%, bezogen auf den Gesamtgehalt an anwesenden Diaminen, wenigstens eines Diamins ausgewählt aus der Gruppe:
cycloaliphatisches Diamin mit 6 bis 20 Kohlenstoffatomen, araliphatisches Diamin mit 8-20 C-Atomen,
wobei der prozentuale Molgehalt an Dicarbonsäuren 100% und der prozentuale Molgehalt an Diaminen 100% ausmacht, sowie aus:
(A3) 0 - 100 Mol-% Aminocarbonsäuren und/oder Lactamen mit 6 bis 12 Kohlenstoffatomen
mit der Massgabe, dass die Konzentration von (A3) höchstens 40 Gew.-%, bevorzugt höchstens 30 Gew.-%, insbesondere höchstens 20 Gew.-% bezogen auf die Summe von (A1) bis (A3) ausmacht.

6. Polyamidformmasse nach Anspruch 5, **dadurch gekennzeichnet, dass** die von Terephthalsäure verschiedene Dicarbonsäure der Komponente A1 ausgewählt ist aus der Gruppe: Naphthalindicarbonsäure, Isophthalsäure Adipinsäure, Korksäure, Azelainsäure, Sebazinsäure, Undecandisäure, Dodecandisäure, Brassylsäure, Tetradecandisäure, Pentadecandisäure, Hexadecandisäure, Octadecandisäure, Dimersäure, cis- und/oder trans-Cyclohexan-1,4-dicarbonsäure, cis- und/oder trans-Cyclohexan 1,3-dicarbonsäure respektive Mischungen davon, oder dass das aliphatische Diamin der Komponente A2 ausgewählt ist aus der Gruppe: 1,4-Butandiamin, 1,5-Pentandiamin, 1,6-Hexandiamin, 2-Methyl-1,5-pentandiamin, 1,7-Heptandiamin, 1,8-Octandiamin, 1,9-Nonandiamin, 2-Methyl-1,8-octandiamin, 2,2,4-Trimethylhexamethylendiamin, 2,4,4-Trimethylhexamethylendiamin, 5-Methyl-1,9-nonandiamin, 1,14-Decandiamin, 1,11-Undecandiamin, 2-Butyl-2-ethyl-1,5-pentandiamin, 1,12-Dodecandiamin, 1,13-Tridecandiamin, 1,14-Tetradecandiamin, 1,16-Hexadecandiamin, 1,18-Octadecandiamin oder eine Mischung davon, wobei folgende Gruppe bevorzugt ist: 1,6-Hexandiamin, 2-Methyl-1,5-pentandiamin, 1,9-Nonandiamin, 2-Methyl-1,8-octandiamin, 1,10-Decandiamin und 1,12-Dodecandiamin, insbesondere 1,6-Hexandiamin und 1,10-Decandiamin, respektive Mischungen davon, oder dass das cycloaliphatische respektive araliphatische Diamin der Komponente A2 ausgewählt ist aus der Gruppe: Cyclohexandiamin, 1,3-Bis-(Aminomethyl)-cyclohexan, Isophorondiamin, Norbornandimethylamin, 4,4'-Diaminodicyclohexylmethan, 2,2-(4,4'-Diaminodicyclohexyl)propan, Bis-(4-Amino-3-ethyl-cyclohexyl)-methan, Bis-(4-Amino-3,5-dimethy-cyclohexyl)-methan und 3,3'-Dimethyl-4,4'-diaminodicyclohexylmethan, m-Xylylendiamin und p-Xylylendiamin, respektive Mischungen davon, oder dass die Komponente A3 ausgewählt ist aus der Gruppe: Caprolactam, α,ω-Aminocapronsäure, α,ω-Aminononansäure, α,ω-Aminoundecansäure, Laurinlactam α,ω-Amino-dodecansäure, α,ω-Aminosäuren mit 4, 6, 7, 8, 11 oder 12 C-Atomen, insbesondere Pyrrolidin-2-on, ε-Caprolactam, Önanthlactam, Capryllactam, Laurinlactam, 1,4-Aminobutansäure, 1,6-Aminohexansäure, 1,7-Aminoheptansäure, 1,8-Aminooctansäure, 1,11-Aminoundecansäure und 1,12-Aminododecansäure respektive Mischungen davon.

7. Polyamidformmasse nach einem der Ansprüche 5 oder 6, **dadurch gekennzeichnet, dass** der Anteil an Terephthalsäure in der Komponente A1 wenigstens 50 Mol-% ausmacht, vorzugsweise wenigstens 52 Mol-%, insbesondere vorzugsweise wenigstens 54 Mol-%, und ganz besonders bevorzugt wenigstens 62 Mol-%, und dass bevorzugtermassen die Komponente A2 ausschliesslich aus Hexamethylendiamin besteht oder ausschliesslich aus 2-Methyl-1,5-Pentandiamin oder ausschliesslich aus einer Mischung aus Hexamethylendiamin und 2-Methyl-1,5-Pentandiamin.

8. Polyamidformmasse nach einem der Ansprüche 5-7, **dadurch gekennzeichnet, dass** der Anteil an Terephthalsäure in der Komponente A1 wenigstens 50 Mol-% ausmacht, und dass innerhalb der Komponente A2 das aliphatische Diamin Hexamethylendiamin in einem Anteil von wenigstens 10 Mol-% oder wenigstens 15 Mol.-%,, vorzugsweise wenigstens 50 Mol-%, umfasst, und dass der verbleibende Anteil an Diamin ausgewählt ist aus der Gruppe: Nonandiamin, Methyloctandiamin, Decandiamin Dodecandiamin, Trimethyl-hexamethylendiamin, m-Xylylendiamin, Bis-(4-aminocyclohexyl)-methan, Bis-(4-amino-3-methyl-cyclohexyl)-methan, oder eine Mischung davon, wobei vorzugsweise aus dieser Gruppe nur ein System in einer Mischung mit Hexamethylendiamin eingesetzt wird,
dass der Anteil an Terephthalsäure in der Komponente A1 wenigstens 50 Mol-% ausmacht, und dass die Komponente A2 eine Mischung aus Hexamethylendiamin und Decandiamin ist, wobei mindestens 10 Mol-%, bevorzugt mindestens 15 Mol-%, insbesondere bevorzugt mindestens 50 Mol-%, Hexamethylendiamin, bezogen auf den Gesamtdiamingehalt, eingesetzt wird;
dass der Anteil an Terephthalsäure in der Komponente A1 wenigstens 80 Mol-%, bevorzugt 100 Mol-%, ausmacht, und dass die Komponente A2 aus 10 - 60 Mol-% Hexamethylendiamin und 40 - 90 Mol-% Decandiamin besteht.

9. Polyamidformmasse nach einem der vorhergehenden Ansprüche 5-8, **dadurch gekennzeichnet, dass** die Komponente A enthält oder gebildet wird durch ein teilkristallines Polyamid 6T/6I mit 50 bis 80 Mol-% Hexamethylenterephthalamid-Einheiten und 20 bis 50 Mol-% Hexamethylenisophthalamid-Einheiten, vorzugsweise mit 55 bis 75 Mol-% Hexamethylenterephthalamid-Einheiten und 25 bis 45 Mol-% Hexamethylenisophthalamid-Einheiten, insbesondere vorzugsweise mit 62 bis 73 Mol-% Hexamethylenterephthalamid-Einheiten und 25 bis 38 Mol-% Hexamethylenisophthalamid-Einheiten,
oder dass die Komponente A gebildet wird durch ein teilkristallines Polyamid 6T/66 mit 50 bis 80 Mol-% Hexamethylenterephthalamid-Einheiten und 20 bis 50 Mol-% Hexamethylenadipamid-Einheiten, vorzugsweise mit 50 bis 65 Mol-% Hexamethylenterephthalamid-Einheiten und 35 bis 50 Mol-% Hexamethylenadipamid-Einheiten insbesondere vorzugsweise mit 52 bis 62 Mol-% Hexamethylenterephthalamid-Einheiten und 38 bis 48 Mol-% Hexamethylenadipamid,
oder dass die Komponente A gebildet wird durch ein teilkristallines ternäres Polyamid, bevorzugtermassen 6T/6I/66 mit 50 bis 70 Mol-% Hexamethylenterephthalamid-, 5 bis 45 Mol-% Hexamethylenisophthalamid-Einheiten und 5 bis 45 Mol-% Hexamethylenadipamid-Einheiten;
oder 6T/6I/X mit mindestens 50 Mol-% Hexamethylenterephthalamid-, 0 bis 40 Mol-% Hexamethylenisophthalamid- und 10 bis 50 Mol-% aliphatische Einheiten der Formel NH-(CH2)n-1-CO-, wobei n = 6, 11 oder 12 ist;
oder 6T/6I/X mit mindestens 50 Mol-% Hexamethylenterephthalamid-, 10 bis 30 Mol-% Hexamethylenisophthalamid- und 10 bis 40 Mol-% aliphatische Einheiten der Formel -NH-(CH2)n-1-CO-, wobei n gleich 6, 11 oder 12 ist;
oder 6T/6I/X mit 52 bis 73 Mol-% Hexamethylenterephthalamid-, 0 bis 36 Mol-% Hexamethylenisophthalamid- und 12 bis 48 Mol-% aliphatische Einheiten der Formel -NH-(CH2)n-1-CO-, wobei n gleich 6,11 oder 12 ist;
oder 6T/6I/X mit 52 bis 73 Mol-% Hexamethylenterephthalamid- und 10 bis 36 Mol-% Hexamethylenisophthalamid-, 12 bis 38 Mol-% aliphatische Einheiten der Formel -NH-(CH2)n-1-CO-, wobei n gleich 6, 11 oder 12 ist.

10. Polyamidformmasse nach einem der vorhergehenden Ansprüche, **dadurch gekennzeichnet, dass** die Komponente (A) ein aliphatisches Polyamid aufweist oder durch ein aliphatisches Polyamid gebildet wird, wobei das aliphatische Polyamid ausgewählt ist aus der folgenden Gruppe: Polyamid 46, Polyamid 46/66, Polyamid 46/56 oder Mischungen davon.

11. Polyamidformmasse nach einem der vorhergehenden Ansprüche, **dadurch gekennzeichnet, dass** die Komponente (C) in einem Anteil von 15-65 Gew.-% vorliegt, vorzugsweise im Bereich von 20-60 Gew.-%,
oder dass in Komponente (C) die faserförmigen Verstärkungsstoffe ausgewählt sind aus der folgenden Gruppe: Glasfasern, Basaltfasern, Titanatwhisker, Kohlenstoffasern, Graphitfasern, Aramidfasern, Nanotubes, oder Mischungen respektive oberflächenbehandelte Formen davon, jeweils mit kreisförmiger oder nicht-kreisförmiger Querschnittfläche, wobei bevorzugterweise Glasfasern ausgewählt sind, und wobei im Fall von flachen Glasfasern solche mit einem Abmessungsverhältnis von der Hauptquerschnittsachse zur senkrecht darauf stehender Nebenquerschnittsachse von mehr als 2 bevorzugt von 2 bis 8, insbesondere von 2 bis 5 bevorzugt eingesetzt werden,
oder dass in Komponente (C) die teilchenförmigen Füllstoffe ausgewählt sind aus der Gruppe bestehend aus: Titandioxid, Zinksulfid, Bariumsulfat, Bariumtitanat, Talk, Glimmer, Silikaten, Quarz, Glaskugeln, Glasflakes, Wollastonit, Kaolin, Kieselsäuren, Magnesiumcarbonat, Magnesiumhydroxid, Kreide, gemahlenem oder gefälltem Calciumcarbonat, Kalk, Feldspat, Metallpulver, insbesondere Eisenpulver, anorganische Pigmente, wie insbesondere Eisenoxid, Eisenmanganoxid, Metalloxide, insbesondere Spinelle, wie insbesondere Kupfereisenspinell, Kupferchromoxid, Kupferchromit (CuCr2O4), Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Nickel-Antimon-Titanat, Chrom-Antimon-Titanat, hart- oder weichmagnetische Metallen oder Legierungen bzw. Keramiken, hohlkugeligen Silikatfüllstoffen, Aluminiumoxid, Bornitrid, Borcarbid, Aluminiumnitrid, Calciumfluorid und Mischungen oder oberflächenbehandelte Formen davon.

12. Polyamidformmasse nach einem der vorhergehenden Ansprüche, **dadurch gekennzeichnet, dass** der Anteil an Komponente (D) im Bereich von 5-15 Gew.-% liegt, vorzugsweise im Bereich von 5-10 Gew.-%,
und/oder dass die Komponente (D), wenn als von (A) verschiedene Polymere ausgewählt, ausgewählt ist aus der Gruppe bestehend aus: Polycarbonat,
Polystyrol, Polymethylmethacrylat, Acrylnitril-Butadien-Styrol-Copolymerisat, Acrylnitril-Styrol-Copolymer, Polyolefin, Polyoxymethylen, Polyester, insbesondere Polyethylenterephthalat, Polybutylenterephthalat, Polysulfon, Polyphenylenether, Polyphenylensulfid, Polyphenylenoxid, flüssigkristalline Polymere, Polyetherketon, Polyetheretherketon, Polyimid, aliphatische Polyamide mit einem Schmelzpunkt unter 270 °C, amorphe Polyamide mit einer Glasübergangstemperatur von 90 bis 200°C und einer Schmelzenthalpie von höchstens 4 J/g, Polyamidimid, Polyesterimid, Polyetheramid, Polyesteramid, Polyetheresteramid, Polyurethan, Polysiloxan, Polyacrylat, Polymethacrylat sowie Mischungen oder Copolymere auf Basis solcher Systeme, wobei bevorzugt Polymere aus der folgenden Gruppe ausgewählt werden: PA 56, PA 66, PA 610, PA 612, PA 6/12, PA 12, PA11, PA 1010, PA 1012 und PA 1212, PA 6I/6T, PA 10I/10T, PA 10I/10T/BACI/BACT, PA MACMI/12, PA MACM12 sowie Mischungen oder Copolymere auf Basis solcher Systeme,
und/oder dass die Komponente (D), wenn als von (B) verschiedene Schlagzähmodifikatoren ausgewählt, ausgewählt ist aus der Gruppe bestehend aus: Naturkautschuk, Polybutadien, Polyisopren, Polyisobutylen, Mischpolymerisat des Butadiens und/oder Isoprens mit Styrol oder Styrolderivaten und anderen Comonomeren, hydriertes Mischpolymerisat, Mischpolymerisat, das durch Pfropfen oder Copolymerisation mit Säureanhydriden, (Meth)acrylsäure und deren Ester entstanden ist, Pfropfkautschuk mit einem vernetzten elastomeren Kern, der aus Butadien, Isopren oder Alkylacrylaten besteht und eine Pfropfhülle aus Polystyrol hat, unpolares oder polares Olefinhomo- und copolymeres wie Ethylen-Propylen-, Ethylen-Propylen-Dien- und Ethylen-Octen- Kautschuk, unpolares oder polares Olefin-Homopolymeres und -Copolymeres, das durch Pfropfen oder Copolymerisation mit Säureanhydriden, (Meth)acrylsäure und deren Ester entstanden ist, carbonsäure-funktionalisiertes Copolymeres wie Poly(ethen-co-(meth)acrylsäure) oder Poly(ethen-co-1-olefin-co-(meth)acrylsäure) sowie Mischungen oder Copolymere auf Basis solcher Systeme.

13. Polyamidformmasse nach einem der vorhergehenden Ansprüche, **dadurch gekennzeichnet, dass** der Anteil an Flammschutzmittel der Komponente (E) im Bereich von 0-20 Gew.-% liegt, vorzugsweise im Bereich von 9-18 Gew.-% und insbesondere vorzugsweise im Bereich von 11-16 Gew.-%,
und/oder dass der Anteil der Additive der Komponente (F) im Bereich von 0-4 Gew.-% liegt,
und/oder dass die Additive der Komponente (F) ausgewählt sind aus der folgenden Gruppe oder einer Mischung davon: Haftvermittler, Kristallisations-Beschleuniger oder -Verzögerer, Antioxidantien, Antiozonantien, Lichtschutzmitteln, Hitzestabilisatoren, einschliesslich Phenole, Phosphite, Kupferhalogenide, Ceroxidhydrate, Lanthansalze, UV-Stabilisatoren, UV-Absorber, UV-Blocker, Fliesshilfsmittel, Gleitmittel, Entformungsmittel, Weichmacher, Stabilisatoren, Verarbeitungshilfsmittel, Antistatika, Pigmente, Farb- und Markierungsstoffe, Nanoteilchen in Plättchenform, Leilfähigkeitsadditive, einschliesslich Russ, Graphitpulver oder Kohlenstoffnanofibrillen, Residuen aus Polymerisationsverfahren wie Katalysatoren, Salze und deren Derivate, sowie Regler wie Monosäuren oder Monoamine, und/oder wobei es sich um sauerstoff-, stickstoff- oder schwefelhaltige Metallverbindungen als Stabilisatoren, wobei Metalle wie Aluminium, Calcium, Barium, Natrium, Kalium, Magnesium und/oder Zink bevorzugt sind, und insbesondere bevorzugt Verbindungen ausgewählt aus der Gruppe der Oxide, Hydroxide, Carbonate, Silikate, Borate, Phosphate, Stannate sowie Kombinationen oder Mischungen dieser Verbindungen, wie Oxid-Hydroxide oder Oxid-Hydroxid-Carbonate sind.

14. Verfahren zur Herstellung, Bereitstellung oder Verarbeitung einer Polyamidformmasse nach einem der vorhergehenden Ansprüche, **dadurch gekennzeichnet, dass** wenigstens die Komponenten (A)-(B), gegebenenfalls zusätzlich auch eine, mehrere oder alle der Komponenten (C)-(F), vorgelegt werden und bei einer Temperatur von wenigstens 290°C, vorzugsweise von wenigstens 300°C, gemischt werden, bevorzugt in einem Extrusionsprozess, bevorzugt während einer Zeitdauer, wie sie bei üblichen Extrusions- oder Spritzgussverfahren auftritt, insbesondere von wenigstens 10 Sekunden, oder von wenigstens 20 Sekunden oder 30 Sekunden, vermischt werden, vorzugsweise in einem Schneckenextruder, einschliesslich Ein- oder Zweiwellenextruder, einem Multiwellenextruder oder einer Spritzgussmaschine.

15. Bauteil hergestellt aus einer Polyamidformmasse nach einem der vorhergehenden Ansprüche, wobei es sich vorzugsweise beim Bauteil um ein Gehäuse oder ein tragendes Strukturelement, insbesondere für Elektrik- und/oder Elektronikanwendungen oder im Automobilbereich handelt, insbesondere um Konnektoren, Lautsprecher, Mikrophone, Rahmenteile.

16. Verwendung von Ethylen-Vinylacetat-Copolymer zur Einstellung der Fliessfähigkeit eines thermoplastischen teilkristallinen Polyamids ausgewählt aus der folgenden Gruppe: aliphatisches Polyamid, cycloaliphatisches Polyamid, teilaromatisches Polyamid, oder eine Mischung davon, mit einer Schmelztemperatur (Tₘ) von wenigstens 270°C und einer Schmelzenthalpie (ΔHm) im Bereich von 30-70 J/g, jeweils gemessen nach ISO-Norm 11357-1 am Granulat mit einer Aufheizrate von 20°C/min, wobei bezogen auf die Gesamtmasse das Ethylen-Vinylacetat-Copolymer in einem Anteil im Bereich von 1-10 Gew.-% eingesetzt wird und wobei bevorzugtermassen ein Ethylen-Vinylacetat-Copolymer mit einem Gehalt an Vinylacetat von 5-35 %, vorzugsweise 8-25 %, insbesondere vorzugsweise 10-20 % ist, wobei die Prozente jeweils auf die Gesamtmasse an Ethylen-Vinylacetat-Copolymer, inklusive gegebenenfalls vorhandener Pfropfung, bezogen sind und wobei weiterhin vorzugsweise das Ethylen-Vinylacetat-Copolymer gepfropft ist, vorzugsweise mit einem System ausgewählt aus der folgenden Gruppe: Acrylsäure, Methacrylsäure, Maleinsäure, Maleinsäureanhydrid, Maleinsäuremonobutylester, Fumarsäure, Aconitsäure und/oder Itaconsäureanhydrid, oder Kombinationen davon, vorzugsweise ausgewählt als Acrylsäure, wobei das Ethylen-Vinylacetat-Copolymer bevorzugtermassen eine Pfropfung im Bereich von 0.5-5 %, vorzugsweise im Bereich von 1-3 % aufweist, wobei die Prozente jeweils auf die Gesamtmasse an Ethylen-Vinylacetat-Copolymer, inklusive Pfropfung, bezogen sind.

## Claims

1. Polyamide moulding composition consisting of the following components:
(A) 29 - 89 wt% of at least one partly crystalline thermoplastic homo- or copolyamide selected from the following group: aliphatic polyamide, cycloaliphatic polyamide, partly aromatic polyamide, or a mixture thereof, having a melting temperature (Tₘ) of at least 270°C and a melting enthalpy (ΔHm) in the range of 30-70 J/g, each measured to ISO standard 11357-3 on the granulate at a heating rate of 20°C/min;
(B) 1 - 15 wt% of ethylene-vinyl acetate copolymer;
(C) 10 - 70 wt% of filling and reinforcing materials selected from the following group: fibrous reinforcing materials, particulate fillers and mixtures thereof;
(D) 0 - 20 wt% of impact modifier other than (B) and/or polymers other than (A);
(E) 0 - 20 wt% of flame retardant; and
(F) 0 - 5 wt% of additives,
wherein the sum total of components (A)-(F) is 100 weight percent.

2. Polyamide moulding composition according to Claim 1, **characterized in that** the proportion of component (B) is in the range of 1.5-10 wt%, preferably in the range of 2-6 wt%,
and/or **in that** said component (B) is an ethylene-vinyl acetate copolymer having a vinyl acetate content of 5-35%, preferably 8-25%, more preferably 10-20%, wherein the percentages are each based on the overall mass of ethylene-vinyl acetate copolymer, including any graft present, and wherein the ethylene-vinyl acetate copolymer preferably has a molar mass in the range of 20 000-500 000 g/mol, more preferably in the range of 30 000-300 000 g/mol.

3. Polyamide moulding composition according to either preceding claim, **characterized in that** the ethylene-vinyl acetate copolymer of component (B) is grafted, preferably with a system selected from the following group: acrylic acid, methacrylic acid, maleic acid, maleic anhydride, monobutyl maleate, fumaric acid, aconitic acid, glycidyl acrylate, glycidyl methacrylate and/or itaconic anhydride, or combinations thereof, preferably selected as acrylic acid, wherein the ethylene-vinyl acetate copolymer preferably has a graft in the range of 0.2-4%, preferably in the range of 0.5-2.5%, wherein the percentages are each based on the overall mass of ethylene-vinyl acetate copolymer, including graft.

4. Polyamide moulding composition according to any preceding claim, **characterized in that** component (A) is exclusively an aliphatic and/or partly aromatic, partly crystalline polyamide having a melting enthalpy (ΔHm) in the range of 40-65 J/g, and/or with a melting temperature (Tₘ) in the range of 280°C-340°C, more preferably in the range of 290°C-330°C, each measured to ISO standard 11357-3 on the granulate at a heating rate of 20°C/min, or a mixture of such polyamides.

5. Polyamide moulding composition according to any preceding claim, **characterized in that** said component (A) consists essentially or entirely completely of a partly aromatic, partly crystalline polyamide having a melting temperature (Tₘ) measured to ISO standard 11357-3 on the granulate at a heating rate of 20°C/min, of at least 290°C, constructed from:
(A1) 25 - 100 mol% of terephthalic acid, based on the overall content of acids present,
0 - 75 mol%, based on the overall content of acids present, of at least one dicarboxylic acid selected from the group: aromatic dicarboxylic acid of 8 to 20 carbon atoms other than terephthalic acid, aliphatic dicarboxylic acid of 6 to 36 carbon atoms, cycloaliphatic dicarboxylic acid of 8 to 20 carbon atoms, or a mixture thereof,
(A2) 25 - 100 mol%, based on the overall content of diamines present, of at least one aliphatic diamine having 4 to 36 carbon atoms,
0 - 75 mol%, based on the overall content of diamines present, of at least one diamine selected from the group: cycloaliphatic diamine of 6 to 20 carbon atoms, araliphatic diamine of 8-20 carbon atoms, wherein the percentage molar content of dicarboxylic acids is 100% and the percentage molar content of diamines is 100%,
and also from:
(A3) 0 - 100 mol% of amino carboxylic acids and/or lactams of 6 to 12 carbon atoms,
with the proviso that the concentration of (A3) is at most 40 wt%, preferably at most 30 wt% and more preferably at most 20 wt% based on the sum total of (A1) to (A3).

6. Polyamide moulding composition according to Claim 5, **characterized in that** the component A1 dicarboxylic acid other than terephthalic acid is selected from the group: naphthalenedicarboxylic acid, isophthalic acid, adipic acid, suberic acid, azelaic acid, sebacic acid, undecanedioic acid, dodecanedioic acid, brassylic acid, tetradecanedioic acid, pentadecanedioic acid, hexadecanedioic acid, octadecanedioic acid, dimer acid, cis- and/or trans-cyclohexane-1,4-dicarboxylic acid, cis- and/or trans-cyclohexane-1,3-dicarboxylic acid, and/or mixtures thereof,
or **in that** the aliphatic diamine of component A2 is selected from the group: 1,4-butanediamine, 1,5-pentanediamine, 1,6-hexanediamine, 2-methyl-1,5-pentanediamine, 1,7-heptanediamine, 1,8-octanediamine, 1,9-nonanediamine, 2-methyl-1,8-octanediamine, 2,2,4-trimethylhexamethylenediamine, 2,4,4-trimethylhexamethylenediamine, 5-methyl-1,9-nonanediamine, 1,10-decanediamine, 1,11-undecanediamine, 2-butyl-2-ethyl-1,5-pentanediamine, 1,12-dodecanediamine, 1,13-tridecanediamine, 1,14-tetradecanediamine, 1,16-hexadecanediamine, 1,18-octadecanediamine or a mixture thereof, wherein the following group is preferable: 1,6-hexanediamine, 2-methyl-1,5-pentanediamine, 1,9-nonanediamine, 2-methyl-1,8-octanediamine, 1,10-decanediamine and 1,12-dodecanediamine, in particular 1,6-hexanediamine and 1,10-decanediamine, and/or mixtures thereof,
or **in that** the cycloaliphatic and/or araliphatic diamine of component A2 is selected from the group: cyclohexanediamine, 1,3-bis(aminomethyl)cyclohexane, isophoronediamine, norbornanedimethylamine, 4,4'-diaminodicyclohexylmethane, 2,2-(4,4'-diaminodicyclohexyl)propane, bis(4-amino-3-ethylcyclohexyl)methane, bis(4-amino-3,5-dimethylcyclohexyl)methane and 3,3'-dimethyl-4,4'-diamino-dicyclohexylmethane, m-xylylenediamine and p-xylylenediamine, and/or mixtures thereof,
or **in that** component A3 is selected from the group: caprolactam, α,ω-aminocaproic acid, α,ω-aminononanoic acid, α,ω-aminoundecanoic acid, laurolactam, α,ω-aminododecanoic acid, α,ω-amino acids having 4, 6, 7, 8, 11 or 12 carbon atoms, in particular 2-pyrrolidinone, ε-caprolactam, enantholactam, capryllactam, laurolactam, 1,4-aminobutanoic acid, 1,6-aminohexanoic acid, 1,7-aminoheptanoic acid, 1,8-aminooctanoic acid, 1,11-aminoundecanoic acid and 1,12-aminododecanoic acid, and/or mixtures thereof.

7. Polyamide moulding composition according to either of Claims 5 and 6, **characterized in that** the proportion of terephthalic acid in component A1 is at least 50 mol%, preferably at least 52 mol%, more preferably at least 54 mol% and most preferably at least 62 mol%, and **in that** component A2 preferably consists exclusively of hexamethylenediamine or exclusively of 2-methyl-1,5-pentanediamine or exclusively of a mixture of hexamethylenediamine and 2-methyl-1,5-pentanediamine.

8. Polyamide moulding composition according to any of Claims 5-7, **characterized in that** the proportion of terephthalic acid in component A1 is at least 50 mol%, and **in that** the aliphatic diamine hexamethylenediamine comprises a proportion of at least 10 mol% or at least 15 mol%, preferably at least 50 mol%, within component A2, and **in that** the remaining proportion of diamine is selected from the group: nonanediamine, methyloctanediamine, decanediamine, dodecanediamine, trimethylhexamethylenediamine, m-xylylenediamine, bis(4-amino-cyclohexyl)methane, bis(4-amino-3-methylcyclohexyl)methane, or a mixture thereof, wherein it is preferably only one system from this group which is employed in a mixture with hexamethylenediamine,
**in that** the proportion of terephthalic acid in component A1 is at least 50 mol%, and **in that** component A2 is a mixture of hexamethylenediamine and decanediamine employing at least 10 mol%, preferably at least 15 mol%, more preferably at least 50 mol% of hexamethylenediamine, based on the overall diamine content;
**in that** the proportion of terephthalic acid in component A1 is at least 80 mol%, preferably 100 mol%, and **in that** component A2 consists of 10 - 60 mol% of hexamethylenediamine and 40 - 90 mol% of decanediamine.

9. Polyamide moulding composition according to any of preceding Claims 5-8, **characterized in that** component A contains or is formed by a partly crystalline polyamide 6T/6I having 50 to 80 mol-% of hexamethyleneterephthalamide units and 20 to 50 mol% of hexamethyleneisophthalamide units, preferably having 55 to 75 mol% of hexamethyleneterephthalamide units and 25 to 45 mol% of hexamethyleneisophthalamide units, more preferably having 62 to 73 mol% of hexamethyleneterephthalamide units and 25 to 38 mol% of hexamethyleneisophthalamide units,
or **in that** component A is formed by a partly crystalline polyamide 6T/66 having 50 to 80 mol% of hexamethyleneterephthalamide units and 20 to 50 mol% of hexamethyleneadipamide units, preferably having 50 to 65 mol% of hexamethyleneterephthalamide units and 35 to 50 mol% of hexamethyleneadipamide units, more preferably having 52 to 62 mol% of hexamethyleneterephthalamide units and 38 to 48 mol% of hexamethyleneadipamide,
or **in that** component A is formed by a partly crystalline ternary polyamide, preferably 6T/6I/66 having 50 to 70 mol% of hexamethyleneterephthalamide units, 5 to 45 mol% of hexamethyleneisophthalamide units and 5 to 45 mol% of hexamethyleneadipamide units;
or 6T/6I/X having at least 50 mol% of hexamethyleneterephthalamide units, 0 to 40 mol% of hexamethyleneisophthalamide units and 10 to 50 mol% of aliphatic units of the formula NH-(CH₂)ₙ₋₁-CO-, where n = 6, 11 or 12;
or 6T/6I/X having at least 50 mol% of hexamethyleneterephthalamide units, 10 to 30 mol% of hexamethyleneisophthalamide units and 10 to 40 mol% of aliphatic units of the formula -NH-(CH₂)ₙ₋₁-CO-, where n is equal to 6, 11 or 12;
or 6T/6I/X having 52 to 73 mol% of hexamethyleneterephthalamide units, 0 to 36 mol% of hexamethyleneisophthalamide units and 12 to 48 mol% of aliphatic units of the formula -NH-(CH₂)ₙ₋₁-CO-, where n is equal to 6, 11 or 12;
or 6T/6I/X having 52 to 73 mol% of hexamethyleneterephthalamide units, 10 to 36 mol% of hexamethyleneisophthalamide units and 12 to 38 mol% of aliphatic units of the formula -NH-(CH₂)ₙ₋₁-CO-, where n is equal to 6, 11 or 12.

10. Polyamide moulding composition according to any preceding claim, **characterized in that** said component (A) includes an aliphatic polyamide or is formed by an aliphatic polyamide, wherein the aliphatic polyamide is selected from the following group: polyamide 46, polyamide 46/66, polyamide 46/56 or mixtures thereof.

11. Polyamide moulding composition according to any preceding claim, **characterized in that** said component (C) is present in a proportion of 15-65 wt%, preferably in the range of 20-60 wt%,
or **in that** the fibrous reinforcing materials in component (C) are selected from the following group: glass fibres, basalt fibres, titanate whiskers, carbon fibres, graphite fibres, aramid fibres, nanotubes, or mixtures and/or surface-treated forms thereof, each of circular or non-circular cross-sectional area, wherein it is preferably glass fibres which are selected, and wherein in the case of flat glass fibres it is preferably those having a dimensional ratio of more than 2, preferably of 2 to 8, in particular of 2 to 5, between the principal cross-sectional axis and the perpendicular secondary cross-sectional axis thereon which are used,
or **in that** the particulate fillers in component (C) are selected from the group consisting of: titanium dioxide, zinc sulphide, barium sulphate, barium titanate, talc, mica, silicates, quartz, glass spheres, glass flakes, wollastonite, kaolin, silicas, magnesium carbonate, magnesium hydroxide, chalk, ground or precipitated calcium carbonate, lime, feldspar, metal powder, in particular iron powder, inorganic pigments, in particular iron oxide, iron manganese oxide, metal oxides, in particular spinels, in particular copper iron spinel, copper chromium oxide, copper chromite (CuCr₂O₄), zinc iron oxide, cobalt chromium oxide, cobalt aluminium oxide, magnesium aluminium oxide, copper chromium manganese mixed oxides, copper manganese iron mixed oxides, nickel antimony titanate, chromium antimony titanate, hard- or soft-magnetic metals or alloys/ceramics, hollow-sphere silicate fillers, alumina, boron nitride, boron carbide, aluminium nitride, calcium fluoride and mixtures or surface-treated forms thereof.

12. Polyamide moulding composition according to any preceding claim, **characterized in that** the proportion of component (D) is in the range of 5-15 wt%, preferably in the range of 5-10 wt%,
and/or **in that** said component (D) when selected as polymers other than (A) is selected from the group consisting of: polycarbonate, polystyrene, polymethyl methacrylate, acrylonitrile-butadiene-styrene copolymer, acrylonitrile-styrene copolymer, polyolefin, polyoxymethylene, polyester, in particular polyethylene terephthalate, polybutylene terephthalate, polysulphone, polyphenylene ether, polyphenylene sulphide, polyphenylene oxide, liquid-crystalline polymers, polyether ketone, polyether ether ketone, polyimide, aliphatic polyamides having a melting point below 270°C, amorphous polyamides having a glass transition temperature of 90 to 200°C and a melting enthalpy of at most 4 J/g, polyamide imide, polyester imide, polyether amide, polyester amide, polyether ester amide, polyurethane, polysiloxane, polyacrylate, polymethacrylate and also mixtures or copolymers based on such systems, wherein it is preferable to select polymers from the following group: PA 56, PA 66, PA 610, PA 612, PA 6/12, PA 12, PA 11, PA 1010, PA 1012 and PA 1212, PA 6I/6T, PA 10I/10T, PA 10I/10T/BACI/BACT, PA MACMI/12, PA MACM12 and also mixtures or copolymers based on such systems,
and/or **in that** said component (D) when selected as impact modifiers other than (B) is selected from the group consisting of: natural rubber, polybutadiene, polyisoprene, polyisobutylene, interpolymer of butadiene and/or of isoprene with styrene or styrene derivatives and other comonomers, hydrogenated interpolymer, interpolymer formed by grafting or copolymerization with acid anhydrides, (meth)acrylic acid and esters thereof, graft rubber having a crosslinked elastomeric core consisting of butadiene, isoprene or alkyl acrylates and having a graft sheath of polystyrene, polar or apolar olefin homo- and copolymer such as ethylene-propylene rubber, ethylene-propylene-diene monomer rubber and ethylene-octene rubber, polar or apolar olefin homopolymer and copolymer formed by grafting or copolymerization with acid anhydrides, (meth)acrylic acid and esters thereof, carboxyl-functionalized copolymer such as poly(ethene-co-(meth)acrylic acid) or poly(ethene-co-1-olefin-co-(meth)acryl acid) and also mixtures or copolymers based on such systems.

13. Polyamide moulding composition according to any preceding claim, **characterized in that** the proportion of flame retardant in component (E) is in the range of 0-20 wt%, preferably in the range of 9-18 wt% and more preferably in the range of 11-16 wt%,
and/or **in that** the proportion of additives of component (F) is in the range of 0-4 wt%,
and/or **in that** the additives of component (F) are selected from the following group or a mixture thereof: adhesion promoters, crystallization accelerants or retarders, antioxidants, antiozonants, photoprotectants, heat stabilizers, including phenols, phosphites, copper halides, cerium oxide hydrates, lanthanum salts, UV stabilizers, UV absorbers, UV blockers, flow assistants, lubricants, demoulding agents, plasticizers, stabilizers, processing aids, antistats, pigments, colouring and marking materials, nanoparticles in platelet form, conductivity additives, including carbon black, graphite powder or carbon nanofibrils, residuals from polymerization processes such as catalysts, salts and derivatives thereof, and also regulators such as monoacids or monoamines, and/or wherein it is oxygen-, nitrogen- or sulphur-containing metal compounds as stabilizers, wherein metals such as aluminium, calcium, barium, sodium, potassium, magnesium and/or zinc are preferable, and compounds are more preferably selected from the group of oxides, hydroxides, carbonates, silicates, borates, phosphates, stannates and also combinations or mixtures thereof, such as oxide-hydroxides or oxide-hydroxide-carbonates.

14. Process for producing, providing or processing a polyamide moulding composition according to any preceding claim, **characterized in that** at least the components (A)-(B), optionally in addition also one, two or more or all components (C)-(F) are initially charged and mixed at a temperature of at least 290°C, preferably of at least 300°C, preferably in an extrusion process, preferably for a period of the type which occurs in customary extrusion or injection-moulding processes, in particular a period of at least 10 seconds, or of at least 20 seconds or 30 seconds, preferably in a screw extruder, including single- or twin-screw extruder, a multi-screw extruder or an injection-moulding machine.

15. Component part produced from a polyamide moulding composition according to any preceding claim, said component part preferably being a housing or a load-bearing structural element, in particular for electrical and/or electronic applications or in the automotive sector, in particular connectors, loudspeakers, microphones, frame parts.

16. Use of ethylene-vinyl acetate copolymer to adjust the flowability of a thermoplastic partly crystalline polyamide selected from the following group: aliphatic polyamide, cycloaliphatic polyamide, partly aromatic polyamide, or a mixture thereof, having a melting temperature (Tₘ) of at least 270°C and a melting enthalpy (ΔHm) in the range of 30-70 J/g, each measured to ISO standard 11357-3 on the granulate at a heating rate of 20°C/min, wherein the ethylene-vinyl acetate copolymer is employed in a proportion in the range of 1-10 wt%, based on the overall mass, and wherein it is preferably an ethylene-vinyl acetate copolymer having a vinyl acetate content of 5-35%, preferably 8-25%, more preferably 10-20%, wherein the percentages are each based on the overall mass of ethylene-vinyl acetate copolymer, including any graft present, and wherein it is further preferable for the ethylene-vinyl acetate copolymer to be grafted, preferably with a system selected from the following group: acrylic acid, methacrylic acid, maleic acid, maleic anhydride, monobutyl maleate, fumaric acid, aconitic acid, and/or itaconic anhydride, or combinations thereof, preferably selected as acrylic acid, wherein the ethylene-vinyl acetate copolymer preferably has a graft in the range of 0.5-5%, preferably in the range of 1-3%, wherein the percentages are each based on the overall mass of ethylene-vinyl acetate copolymer, including graft.

## Revendications

1. Matériau de moulage polyamide à base des constituants suivants:
(A) 29 à 89 % en poids d'au moins un homo- ou copolyamide thermoplastique partiellement cristallin choisi dans le groupe suivant : un polyamide aliphatique, un polyamide cycloaliphatique, un polyamide partiellement aromatique ou un mélange de ceux-ci, ayant une température de fusion (Tₘ) d'au moins 270 °C et une enthalpie de fusion (ΔHm) dans la plage allant de 30 à 70 J/g, chacune mesurée selon la norme ISO 11357-1 sur le granulat avec un taux de chauffe de 20 °C/min ;
(B) 1 à 15 % en poids d'un copolymère éthylène-acétate de vinyle ;
(C) 10 à 70 % en poids de charges et de matières renforçantes choisies dans le groupe suivant : les matières renforçantes fibreuses, les charges particulaires et leurs mélanges ;
(D) 0 à 20 % en poids d'un modificateur de la résistance aux impacts différent de (B) et/ou de polymères différents de (A) ;
(E) 0 à 20 % en poids d'agents ignifuges ;
(F) 0 à 5 % en poids d'additifs,
la somme des composants (A) à (F) étant de 100 pour cent en poids.

2. Matériau de moulage polyamide selon la revendication 1, **caractérisé en ce que** la proportion de composant (B) se situe dans la plage allant de 1,5 à 10 % en poids, de préférence dans la plage allant de 2 à 6 % en poids
et/ou **en ce que** le composant (B) est un copolymère éthylène-acétate de vinyle ayant une teneur en acétate de vinyle de 5 à 35 %, de préférence de 8 à 25 %, de manière particulièrement préférée de 10 à 20 %, les pourcentages se rapportant à chaque fois à la masse totale de copolymère éthylène-acétate de vinyle, y compris un greffage éventuellement présent, et le copolymère éthylène-acétate de vinyle présentant une masse molaire dans la plage allant de 20 000 à 500 000 g/mol, de manière particulièrement préférée dans la plage allant de 30 000 à 300 000 g/mol.

3. Matériau de moulage polyamide selon l'une quelconque des revendications précédentes, **caractérisé en ce que** le copolymère éthylène-acétate de vinyle du composant (B) est greffé, de préférence avec un système choisi dans le groupe suivant : acide acrylique, acide méthacrylique, acide maléique, anhydride de l'acide maléique, ester monobutylique de l'acide maléique, acide fumarique, acide aconitique, acrylate de glycidyle, méthacrylate de glycidyle et/ou anhydride de l'acide itaconique, ou leurs combinaisons, de préférence choisi en tant que l'acide acrylique, le copolymère éthylène-acétate de vinyle présentant de préférence un greffage dans la plage allant de 0,2 à 4 %, de préférence dans la plage allant de 0,5 à 2,5 %, les pourcentages se rapportant à chaque fois à la masse totale de copolymère éthylène-acétate de vinyle, y compris le greffage.

4. Matériau de moulage polyamide selon l'une quelconque des revendications précédentes, **caractérisé en ce que** le composant (A) est exclusivement un polyamide aliphatique et/ou partiellement aromatique, partiellement cristallin, ayant une enthalpie de fusion (ΔHm) dans la plage allant de 40 à 65 J/g et/ou ayant une température de fusion (Tm) dans la plage allant de 280 °C à 340 °C, de manière particulièrement préférée dans la plage allant de 290 °C à 330 °C, chacune mesurée selon la norme ISO 11357-11-2 sur le granulat avec un taux de chauffe de 20 °C/min, ou un mélange de tels polyamides.

5. Matériau de moulage polyamide selon l'une quelconque des revendications précédentes, **caractérisé en ce que** le composant (A) est essentiellement ou entièrement constitué par un polyamide partiellement aromatique partiellement cristallin ayant une température de fusion (Tm) mesurée selon la norme ISO 11357-11-2 sur le granulat avec un taux de chauffe de 20 °C/min d'au moins 290 °C, formé par :
(A1) 25 à 100 % en moles d'acide téréphtalique, par rapport à la teneur totale en acides présents,
0 à 75 % en moles, par rapport à la teneur totale en acides présents, d'au moins un acide dicarboxylique choisi dans le groupe constitué par : un acide dicarboxylique aromatique différent de l'acide téréphtalique de 8 à 20 atomes de carbone, un acide dicarboxylique aliphatique de 6 à 36 atomes de carbone, un acide dicarboxylique cycloaliphatique de 8 à 20 atomes de carbone ou un mélange de ceux-ci,
(A2) 25 à 100 % en moles, par rapport à la teneur totale en diamines présentes, d'au moins une diamine aliphatique de 4 à 36 atomes de carbone,
0 à 75 % en moles, par rapport à la teneur totale en diamines présentes, d'au moins une diamine choisie dans le groupe constitué par : une diamine cycloaliphatique de 6 à 20 atomes de carbone, une diamine araliphatique de 8 à 20 atomes C,
la teneur en moles en pourcentage d'acides dicarboxyliques étant de 100 % et la teneur en moles en pourcentage de diamines étant de 100 %,
ainsi que par:
(A3) 0 à 100 % en moles d'acides aminocarboxyliques et/ou de lactames de 6 à 12 atomes de carbone,
à condition que la concentration d'(A3) soit d'au plus 40 % en poids, de préférence d'au plus 30 % en poids, notamment d'au plus 20 % en poids, par rapport à la somme de (A1) à (A3).

6. Matériau de moulage polyamide selon la revendication 5, **caractérisé en ce que** l'acide dicarboxylique différent de l'acide téréphtalique du composant A1 est choisi dans le groupe constitué par : l'acide naphtalinedicarboxylique, l'acide isophtalique, l'acide adipique, l'acide subérique, l'acide azélaïque, l'acide sébacique, l'acide undécanedioïque, l'acide dodécanedioïque, l'acide brassylique, l'acide tétradécanedioïque, l'acide pentadécanedioïque, l'acide hexadécanedioïque, l'acide octadécanedioïque, l'acide dimérique, l'acide cis- et/ou trans-cyclohexane-1,4-dicarboxylique, l'acide cis- et/ou trans-cyclohexane-1,3-dicarboxylique et leurs mélanges,
ou **en ce que** la diamine aliphatique du composant A2 est choisie dans le groupe constitué par : la 1,4-butanediamine, la 1,5-pentanediamine, la 1,6-hexanediamine, la 2-méthyl-1,5-pentanediamine, la 1,7-heptanediamine, la 1,8-octanediamine, la 1,9-nonanediamine, la 2-méthyl-1,8-octanediamine, la 2,2,4-triméthylhexaméthylènediamine, la 2,4,4-triméthylhexaméthylènediamine, la 5-méthyl-1,9-nonanediamine, la 1,10-décanediamine, la 1,11-undécanediamine, la 2-butyl-2-éthyl-1,5-pentanediamine,
la 1,12-dodécanediamine, la 1,13-tridécanediamine, la 1,14-tétradécanediamine, la 1,16-hexadécanediamine, la 1,18-octadécanediamine ou un mélange de celles-ci, le groupe suivant étant préféré : la 1,6-hexanediamine, la 2-méthyl-1,5-pentanediamine, la 1,9-nonanediamine, la 2-méthyl-1,8-octanediamine, la 1,10-décanediamine et la 1,12-dodécanediamine, notamment la 1,6-hexanediamine et la 1,10-décanediamine, et leurs mélanges,
ou **en ce que** la diamine cycloaliphatique ou araliphatique du composant A2 est choisie dans le groupe constitué par : la cyclohexanediamine, le 1,3-bis-(aminométhyl)-cyclohexane, l'isophoronediamine, la norbornane-diméthylamine, le 4,4'-diaminodicyclohexylméthane, le 2,2-(4,4'-diaminodicyclohexyl)propane, le bis-(4-amino-3-éthyl-cyclohexyl)-méthane, le bis-(4-amino-3,5-diméthyl-cyclohexyl)-méthane et le 3,3'-diméthyl-4,4'-diaminodicyclohexylméthane, la m-xylylènediamine et la p-xylylènediamine, et leurs mélanges,
ou **en ce que** le composant A3 est choisi dans le groupe constitué par : le caprolactame, l'acide α,ω-aminocaproïque, l'acide α,ω-aminononanoïque, l'acide α,ω-aminoundécanoïque, le laurine-lactame, l'acide α,ω-aminododécanoïque, les acides α,ω-aminés contenant 4, 6, 7, 8, 11 ou 12 atomes C, notamment la pyrrolidin-2-one, l'ε-caprolactame, l'oenanthe-lactame, la capryllactame, le laurine-lactame, l'acide 1,4-aminobutanoïque, l'acide 1,6-aminohexanoïque, l'acide 1,7-aminoheptanoïque, l'acide 1,8-aminooctanoïque, l'acide 1,11-aminoundécanoïque et l'acide 1,12-aminododécanoïque, et leurs mélanges.

7. Matériau de moulage polyamide selon l'une quelconque des revendications 5 ou 6, **caractérisé en ce que** la proportion d'acide téréphtalique dans le composant A1 est d'au moins 50 % en moles, de préférence d'au moins 52 % en moles, de manière particulièrement préférée d'au moins 54 % en moles et de manière tout particulièrement préférée d'au moins 62 % en moles, et **en ce que** le composant A2 est de préférence exclusivement constitué d'hexaméthylènediamine ou exclusivement de 2-méthyl-1,5-pentanediamine ou exclusivement d'un mélange d'hexaméthylènediamine et de 2-méthyl-1,5-pentanediamine.

8. Matériau de moulage polyamide selon l'une quelconque des revendications 5 à 7, **caractérisé en ce que** la proportion d'acide téréphtalique dans le composant A1 est d'au moins 50 % en moles, et **en ce que**, dans le composant A2, la diamine aliphatique comprend de l'hexaméthylènediamine en une proportion d'au moins 10 % en moles ou d'au moins 15 % en moles, de préférence d'au moins 50 % en moles, et **en ce que** la proportion restante de diamine est choisie dans le groupe constitué par : la nonanediamine, la méthyloctanediamine, la décanediamine, la dodécanediamine, la triméthylhexaméthylènediamine, la m-xylylènediamine, le bis-(4-aminocyclohexyl)-méthane, le bis-(4-amino-3-méthyl-cyclohexyl)-méthane ou un mélange de ceux-ci, seul un système dans un mélange avec de l'hexaméthylènediamine étant de préférence utilisé à partir de ce groupe,
**en ce que** la proportion d'acide téréphtalique dans le composant A1 est d'au moins 50 % en moles, et **en ce que** le composant A2 est un mélange d'hexaméthylènediamine et de décanediamine, au moins 10 % en moles, de préférence au moins 15 % en moles, de manière particulièrement préférée au moins 50 % en moles, d'hexaméthylènediamine, par rapport à la teneur totale en diamine, étant utilisée ;
**en ce que** la proportion d'acide téréphtalique dans le composant A1 est d'au moins 80 % en moles, de préférence de 100 % en moles, et **en ce que** le composant A2 est constitué de 10 à 60 % en moles d'hexaméthylènediamine et de 40 à 90 % en moles de décanediamine.

9. Matériau de moulage polyamide selon l'une quelconque des revendications 5 à 8 précédentes, **caractérisé en ce que** le composant A contient ou est formé par un polyamide partiellement cristallin 6T/6I contenant 50 à 80 % en moles d'unités hexaméthylène-téréphtalamide et 20 à 50 % en moles d'unités hexaméthylène-isophtalamide, de préférence 55 à 75 % en moles d'unités hexaméthylène-téréphtalamide et 25 à 45 % en moles d'unités hexaméthylène-isophtalamide, de manière particulièrement préférée 62 à 73 % en moles d'unités hexaméthylène-téréphtalamide et 25 à 38 % en moles d'unités hexaméthylène-isophtalamide,
ou **en ce que** le composant A est formé par un polyamide partiellement cristallin 6T/66 contenant 50 à 80 % en moles d'unités hexaméthylène-téréphtalamide et 20 à 50 % en moles d'unités hexaméthylène-adipamide, de préférence 50 à 65 % en moles d'unités hexaméthylène-téréphtalamide et 35 à 50 % en moles d'unités hexaméthylène-adipamide, de manière particulièrement préférée 52 à 62 % en moles d'unités hexaméthylène-téréphtalamide et 38 à 48 % en moles d'hexaméthylène-adipamide,
ou **en ce que** le composant A est formé par un polyamide ternaire partiellement cristallin, de préférence 6T/6I/66 contenant 50 à 70 % en moles d'unités hexaméthylène-téréphtalamide, 5 à 45 % en moles d'unités hexaméthylène-isophtalamide et 5 à 45 % en moles d'unités hexaméthylène-adipamide ;
ou 6T/6I/X contenant au moins 50 % en moles d'unités hexaméthylène-téréphtalamide, 0 à 40 % en moles d'unités hexaméthylène-isophtalamide et 10 à 50 % en moles d'unités aliphatiques de formule NH(CH₂)ₙ₋₁-CO-, avec n = 6, 11 ou 12 ;
ou 6T/6I/X contenant au moins 50 % en moles d'unités hexaméthylène-téréphtalamide, 10 à 30 % en moles d'unités hexaméthylène-isophtalamide et 10 à 40 % en moles d'unités aliphatiques de formule -NH(CH₂)ₙ₋₁-CO-, avec n = 6, 11 ou 12 ;
ou 6T/6I/X contenant 52 à 73 % en moles d'unités hexaméthylène-téréphtalamide, 0 à 36 % en moles d'unités hexaméthylène-isophtalamide et 12 à 48 % en moles d'unités aliphatiques de formule -NH(CH₂)ₙ₋₁-CO-, avec n = 6, 11 ou 12 ;
ou 6T/6I/X contenant 52 à 73 % en moles d'unités hexaméthylène-téréphtalamide et 10 à 36 % en moles d'unités hexaméthylène-isophtalamide, 12 à 38 % en moles d'unités aliphatiques de formule -NH(CH₂)ₙ₋₁-CO-, avec n = 6, 11 ou 12.

10. Matériau de moulage polyamide selon l'une quelconque des revendications précédentes, **caractérisé en ce que** le composant (A) comprend un polyamide aliphatique ou est formé par un polyamide aliphatique, le polyamide aliphatique étant choisi dans le groupe suivant : le polyamide 46, le polyamide 46/66, le polyamide 46/56 ou leurs mélanges.

11. Matériau de moulage polyamide selon l'une quelconque des revendications précédentes, **caractérisé en ce que** le composant (C) est présent en une proportion de 15 à 65 % en poids, de préférence dans la plage allant de 20 à 60 % en poids,
ou **en ce que**, dans le composant (C), les matières renforçantes fibreuses sont choisies dans le groupe suivant : les fibres de verre, les fibres de basalte, les trichites de titanate, les fibres de carbone, les fibres de graphite, les fibres d'aramide, les nanotubes, ou leurs mélanges et formes traitées en surface, à chaque fois de surface de section transversale circulaire ou non circulaire, les fibres de verre étant choisies de préférence, et, dans le cas de fibres de verre plates, celles ayant un rapport de dimensions entre l'axe de la section principale et l'axe de la section secondaire perpendiculaire de plus de 2, de préférence de 2 à 8, notamment de 2 à 5, étant utilisées de préférence,
ou **en ce que**, dans le composant (C), les charges particulaires sont choisies dans le groupe constitué par : le dioxyde de titane, le sulfure de zinc, le sulfate de baryum, le titanate de baryum, le talc, le mica, les silicates, le quartz, les billes de verre, les flocons de verre, la wollastonite, le kaolin, les silices, le carbonate de magnésium, l'hydroxyde de magnésium, la craie, le carbonate de calcium broyé ou précipité, la chaux, le feldspath, les poudres métalliques, notamment la poudre de fer, les pigments inorganiques, tels que notamment l'oxyde de fer, l'oxyde de fer et de manganèse, les oxydes métalliques, notamment les spinelles, tels que notamment la spinelle de cuivre et de fer, l'oxyde de cuivre et de chrome, le chromite de cuivre (CuCr₂O₄), l'oxyde de zinc et de fer, l'oxyde de cobalt et de chrome, l'oxyde de cobalt et d'aluminium, l'oxyde de magnésium et d'aluminium, les oxydes mixtes de cuivre-chrome-manganèse, les oxydes mixtes de cuivre-manganèse-fer, le titanate de nickel-antimoine, le titanate de chrome-antimoine, les métaux magnétiques durs ou souples ou les alliages ou les céramiques, les charges silicatées sphériques creuses, l'oxyde d'aluminium, le nitrure de bore, le carbure de bore, le nitrure d'aluminium, le fluorure de calcium, et leurs mélanges ou formes traitées en surface.

12. Matériau de moulage polyamide selon l'une quelconque des revendications précédentes, **caractérisé en ce que** la proportion du composant (D) se situe dans la plage allant de 5 à 15 % en poids, de préférence dans la plage allant de 5 à 10 % en poids,
et/ou **en ce que** le composant (D), lorsqu'il est choisi en tant que polymères différents de (A), est choisi dans le groupe constitué par : le polycarbonate, le polystyrène, le polyméthacrylate de méthyle, un copolymère acrylonitrile-butadiène-styrène, un copolymère acrylonitrile-styrène, une polyoléfine, le polyoxyméthylène, un polyester, notamment le polyéthylène téréphtalate, le polybutylène téréphtalate, une polysulfone, l'éther de polyphénylène, le polysulfure de phénylène, le polyoxyde de phénylène, les polymères cristallins liquides, la polyéthercétone, la polyétheréthercétone, le polyimide, les polyamides aliphatiques ayant un point de fusion inférieur à 270 °C, les polyamides amorphes ayant une température de transition vitreuse de 90 à 200 °C et une enthalpie de fusion d'au plus 4 J/g, le polyamide-imide, le polyester-imide, le polyéther-amide, le polyester-amide, le polyétherester-amide, le polyuréthane, le polysiloxane, le polyacrylate, le polyméthacrylate, ainsi que les mélanges ou les copolymères à base de tels systèmes, les polymères du groupe suivant étant choisis de préférence : PA 56, PA 66, PA 610, PA 612, PA 6/12, PA 12, PA 11, PA 1010, PA 1012 et PA 1212, PA 6I/6T, PA 10I/10T, PA 10I/10T/BACI/BACT, PA MACMI/12, PA MACM12, ainsi que les mélanges ou copolymères à base de tels systèmes,
et/ou **en ce que** le composant (D), lorsqu'il est choisi en tant que modificateurs de la résistance aux impacts différent de (B), est choisi dans le groupe constitué par : le caoutchouc naturel, le polybutadiène, le polyisoprène, le polyisobutylène, un copolymère de butadiène et/ou d'isoprène avec du styrène ou des dérivés de styrène et d'autres comonomères, un copolymère hydrogéné, un copolymère formé par greffage ou copolymérisation avec des anhydrides d'acide, de l'acide (méth)acrylique et ses esters, un caoutchouc greffé contenant un noyau élastomère réticulé constitué de butadiène, d'isoprène ou d'acrylates d'alkyle, et une enveloppe greffée en polystyrène, un homo- et copolymère oléfinique apolaire ou polaire tel que le caoutchouc d'éthylène-propylène, d'éthylène-propylène-diène et d'éthylène-octène, un homopolymère et copolymère oléfinique apolaire ou polaire, qui est formé par greffage ou copolymérisation avec des anhydrides d'acide, de l'acide (méth)acrylique et ses esters, un copolymère fonctionnalisé par un acide carboxylique, tel que le poly(éthène-co-acide (méth)acrylique) ou le poly(éthène-co-1-oléfine-co-acide (méth)acrylique), ainsi que les mélanges ou copolymères à base de tels systèmes.

13. Matériau de moulage polyamide selon l'une quelconque des revendications précédentes, **caractérisé en ce que** la proportion d'agent ignifuge du composant (E) se situe dans la plage allant de 0 à 20 % en poids, de préférence dans la plage allant de 9 à 18 % en poids et de manière particulièrement préférée dans la plage allant de 11 à 16 % en poids,
et/ou **en ce que** la proportion des additifs du composant (F) se situe dans la plage allant de 0 à 4 % en poids, et/ou **en ce que** les additifs du composant (F) sont choisis dans le groupe suivant ou un mélange de ceux-ci : les promoteurs d'adhésion, les accélérateurs ou ralentisseurs de cristallisation, les antioxydants, les antiozonants, les agents photoprotecteurs, les thermostabilisateurs, y compris les phénols, les phosphites, les halogénures de cuivre, les hydrates d'oxyde de cérium, les sels de lanthane, les stabilisateurs UV, les absorbeurs UV, les bloquants UV, les adjuvants d'écoulement, les lubrifiants, les agents de démoulage, les plastifiants, les stabilisateurs, les adjuvants d'usinage, les antistatiques, les pigments, les colorants et les marqueurs, les nanoparticules sous forme plaquettaire, les additifs de conductivité, y compris le noir de carbone, la poudre de graphite ou les nanofibrilles de carbone, les résidus de procédés de polymérisation tels que les catalyseurs, les sels et leurs dérivés, ainsi que les régulateurs tels que les monoacides ou les monoamines, et/ou il s'agit de composés métalliques contenant de l'oxygène, de l'azote ou du soufre en tant que stabilisateurs, des métaux tels que l'aluminium, le calcium, le baryum, le sodium, le potassium, le magnésium et/ou le zinc étant préférés, et les composés choisis dans le groupe des oxydes, hydroxydes, carbonates, silicates, borates, phosphates, stannates, ainsi que les combinaisons ou mélanges de ces composés étant particulièrement préférés, tels que les oxyde-hydroxydes ou les oxyde-hydroxyde-carbonates.

14. Procédé de fabrication, de préparation ou d'usinage d'un matériau de moulage polyamide selon l'une quelconque des revendications précédentes, **caractérisé en ce qu'**au moins les composants (A) à (B), éventuellement également un, plusieurs ou tous les composants (C) à (F), sont chargés initialement et mélangés à une température d'au moins 290 °C, de préférence d'au moins 300 °C, de préférence dans un procéd é d'extrusion, de préférence pendant une durée telle qu'utilisée dans des procédés d'extrusion ou de moulage par injection usuels, notamment d'au moins 10 secondes ou d'au moins 20 secondes ou 30 secondes, de préférence dans une extrudeuse à vis, y compris une extrudeuse mono- ou bivis, une extrudeuse multivis ou une machine de moulage par injection.

15. Composant fabriqué à partir d'un matériau de moulage polyamide selon l'une quelconque des revendications précédentes, le composant étant de préférence un boîtier ou un élément structural porteur, notamment pour applications électriques et/ou électroniques ou dans le domaine automobile, notamment des connecteurs, des haut-parleurs, des microphones, des éléments de bordure.

16. Utilisation d'un copolymère éthylène-acétate de vinyle pour l'ajustement de la fluidité d'un polyamide thermoplastique partiellement cristallin choisi dans le groupe suivant : un polyamide aliphatique, un polyamide cycloaliphatique, un polyamide partiellement aromatique ou un mélange de ceux-ci, ayant une température de fusion (Tₘ) d'au moins 270 °C et une enthalpie de fusion (ΔHm) dans la plage allant de 30 à 70 J/g, chacune mesurée selon la norme ISO 11357-1 sur le granulat avec un taux de chauffe de 20 °C/min, le copolymère éthylène-acétate de vinyle étant utilisé en une proportion dans la plage allant de 1 à 10 % en poids par rapport à la masse totale et un copolymère éthylène-acétate de vinyle ayant une teneur en acétate de vinyle de 5 à 35 %, de préférence de 8 à 25 %, de manière particulièrement préférée de 10 à 20 %, étant préféré, les pourcentages se rapportant à chaque fois à la masse totale de copolymère éthylène-acétate de vinyle, y compris un greffage éventuellement présent, et le copolymère éthylène-acétate de vinyle étant par ailleurs de préférence greffé, de préférence avec un système choisi dans le groupe suivant : l'acide acrylique, l'acide méthacrylique, l'acide maléique, l'anhydride de l'acide maléique, l'ester monobutylique de l'acide maléique, l'acide fumarique, l'acide aconitique, et/ou l'anhydride de l'acide itaconique, ou leurs combinaisons, de préférence choisi en tant que l'acide acrylique, le copolymère éthylène-acétate de vinyle présentant de préférence un greffage dans la plage allant de 0,5 à 5 %, de préférence dans la plage allant de 1 à 3 %, les pourcentages se rapportant à chaque fois à la masse totale de copolymère éthylène-acétate de vinyle, y compris le greffage.
